(19) **Europäisches Patentamt / European Patent Office / Office européen des brevets**

(11) **EP 2 670 256 B1**

(12) # EUROPEAN PATENT SPECIFICATION

(45) Date of publication and mention
of the grant of the patent:
**03.06.2015 Bulletin 2015/23**

(21) Application number: **12702796.9**

(22) Date of filing: **31.01.2012**

(51) Int Cl.:
*A23L 1/00* (2006.01)     *A23G 9/32* (2006.01)
*A23G 9/38* (2006.01)     *C07K 14/37* (2006.01)
*A23L 1/39* (2006.01)     *A23J 3/08* (2006.01)

(86) International application number:
**PCT/EP2012/051528**

(87) International publication number:
**WO 2012/104286 (09.08.2012 Gazette 2012/32)**

(54) **AERATED FOOD PRODUCTS**

MIT LUFT DURCHSETZTE LEBENSMITTELPRODUKTE

PRODUITS ALIMENTAIRES AÉRÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.02.2011 EP 11153084**

(43) Date of publication of application:
**11.12.2013 Bulletin 2013/50**

(73) Proprietors:
• **Unilever PLC, a company registered in England and
Wales under company no. 41424
London EC4Y 0DY (GB)**
Designated Contracting States:
**CY GB IE MT**
• **Unilever N.V.
3013 AL Rotterdam (NL)**
Designated Contracting States:
**AL AT BE BG CH CZ DE DK EE ES FI FR GR HR HU IS IT LI LT LU LV MC MK NL NO PL PT RO RS SE SI SK SM TR**

(72) Inventors:
• **ARNAUDOV, Luben, Nikolaev
NL-3133 AT Vlaardingen (NL)**
• **BLIJDENSTEIN, Theodorus, Berend, Jan
NL-3133 AT Vlaardingen (NL)**
• **COX, Andrew, Richard
Bedford Bedfordshire MK44 1LQ (GB)**
• **KIM, Hyun-Jung
NL-3133 AT Vlaardingen (NL)**
• **STOYANOV, Simeon, Dobrev
NL-3133 AT Vlaardingen (NL)**

(74) Representative: **van Benthum, Wilhelmus A. J.
Unilever N.V.
Unilever Patent Group
Olivier van Noortlaan 120
3133 AT Vlaardingen (NL)**

(56) References cited:
EP-A1- 1 839 492     US-A- 4 855 156
US-A1- 2007 116 848

• **COX A R ET AL: "Exceptional stability of food foams using class II hydrophobin HFBII", FOOD HYDROCOLLOIDS, ELSEVIER, vol. 23, no. 2, 1 March 2009 (2009-03-01), pages 366-376, XP026128626, ISSN: 0268-005X, DOI: DOI: 10.1016/J.FOODHYD.2008.03.001 [retrieved on 2008-03-07]**

**Description**

The present invention relates to aerated food products containing protein particles, and a method for producing these.

**BACKGROUND OF THE INVENTION**

Aerated food products are widely known, for example food products like mousses, ice cream and whipped cream contain air bubbles which are stabilised in the food products. Gases commonly used for 'aeration' include air, nitrogen and carbon dioxide. Two factors are of importance in the development of aerated food products, and these are (i) the foamability of the product while introducing gas into the product during manufacture and (ii) the foam stability during storage, which is whether the gas bubbles tend to disproportionate or coalesce and whether the foam volume is retained during storage. Many additives are known to be included in the creation of stable foams, and these generally are compounds which are present on the gas bubble surface, which means on the gas-liquid interface during manufacturing of the foam. Known additives include proteins such as sodium caseinate and whey, which are highly foamable, and biopolymers, such as carrageenans, guar gum, locust bean gum, pectins, alginates, xanthan gum, gellan, gelatin and mixtures thereof, which are good stabilisers that work by increasing the thickness (or viscosity of the continuous phase). However, although stabilisers used in the art can often maintain the total foam volume, they are poor at inhibiting the coarsening of the foam microstructure, i.e. increase in gas bubble size by processes such as disproportionation and coalescence Recently, hydrophobins have been proposed to create a stable aerated food products. These are surface active proteins that adsorb to the air-water surface, stabilising the foam by forming elastic layers around the bubbles.

Many of these food products additionally contain dairy protein as an ingredient. Dairy proteins like the caseins and whey proteins are among the most widely used food ingredients. Also other proteins like chicken egg protein or soy proteins are commonly used food ingredients. A property of many of these proteins is that they are surface active, which means that many of these proteins can act as emulsifiers or foam stabilisers in food products. Dairy proteins, for example, are also added for nutritional or taste benefits.

Due to the presence of the surface active proteins, these may interfere with the hydrophobins, effectively leading to unstable food product structure compared to the use of hydrophobins alone. Therefore in many cases it has been found undesirable that the additional proteins added (e.g. whey) are surface active. The presence of surfactants or proteins in the formulation may affect aeration due to competitive adsorption. Nevertheless due to its nutritional properties and for example texturising properties, food formulators still want to include the proteins in their food products. It is the reason why, and whereas hydrophobins have been known for some time to generate stable foam, US2007/116848 describes a process wherein an hydrophobin foam is produced separately from the protein containing mix before being added to it thence generated an aerated composition containing proteins and hydrophobin. This requires a post addition step which makes the process much more difficult to handle, there is therefore a need for a process and composition which allows for the formation of a stable foam without requiring a post addition step.

Proteins have a large number of reactive side groups susceptible to physical, chemical, or enzymic modifications, thus making it possible to obtain appropriate functional properties depending on the purpose intended. In this regard, many physical (e.g., heating and high-pressure processing), enzymatic and chemical modifications of proteins have been described to be useful for conferring surface activities and textural attributes to foods (J. Agric. Food Chem.2005. v53, p8216-8223; Trends Food Sci.Technol. 1997, v8, p334-339).

Many prior art documents have revealed that the irreversible covalent cross-linking of polypeptide chains is a valuable mechanism for increasing the strength of tridimensional protein networks and for providing greater physical integrity in aqueous media by introducing new intra and intermolecular cross-links and therefore resulting in structural network changes. This can have been achieved by physical treatments such as controlled thermal treatment, ultraviolet radiation treatment, or high pressure process (J. Food Sci. 2002, v67, p708-713; J. Agric. Food Chem. 2004, v52, 7897-7904; Food Hydrocolloids 2004, v18, p647-654; Biotechnol. AdV. 2005, v23, p71-73; J. Agric. Food Chem. 1998, v46, p4022-4029; Lebensm.-Wiss. Technol. 1999, v32, p129-133; J. Agric. Food Chem. 2001, v48, p3202-3209; J. Food Sci. 1996, v61, p825-828). Enzymes such as transglutaminase have also acted as covalent cross-linkers (J. Agric. Food Chem. 1998, v46, p4022-4029), and naturally occurring cross-linkers such as genipin and tannic acid have been reported to modify the mechanical properties of protein based system from various sources (Milk, soy, wheat, and zein, etc) (J. Cereal Sci. 2004, v40, p127-135). Also, a broad variety of chemical agents, such as diisocyanates and carbodiimides (Mater. Sci. Eng. C: Biomimetic Supramol. Syst. 2004, v24, p441-446;Ind. Crops Prod. 2004,v20, p281-289; Ind. Crops Prod. 2004, v20, p291-300), formaldehyde (Chemistry of Protein Conjugation and Cross-Linking; CRC Press: Boca Raton, FL, 1991), glutaraldehyde (Methods Enzymol. 1983, v91, p580-609) have been widely reported in protein network modification by crosslinking (Food Sci. Biotechnol. 2000, 9, 228-233, 21: Trans.ASAE 1995, v38, p1805-1808; J. Agric. Food Chem. 2001, v49, p4676-4681; Int. J. Food Sci. Technol. 1995, v30, p599-608; J. Agric. Food Chem. 1997, v45, p1596-1599; Polymer 2002, v43, p5417-5425; Food Hydrocolloids 2004, v18, p717-726; Lebensm.-Wiss. Technol. 2004, v37, p731-738, Cereal Foods World 1996, v41, p376-382).

It is also known that heat treatment reduces the ability of whey protein to act as foam stabiliser. Phillips et al. (Journal of Food Science, 1990, vol. 55, p. 1116-1119) disclose that the heat treatment of whey protein solutions reduces the foaming ability of these solutions. Dissanayake et al. (Journal of Dairy Science, 2009, vol. 92, p. 1387-1397) disclose a method to produce whey protein particles, which do not show foaming ability. The process involves a heating step at 90°C for 20 minutes, subsequently a high pressure microfluidisation step at 140 MPa is performed, and this is followed by spray drying the obtained material.

Nicorescu et al. (Food Research International, 2008, vol. 41, p. 707-713) disclose that heating of solutions of whey protein influences the surface tension of these solutions: heating leads to a surface tension of about 40 to 50 mN·m$^{-1}$, which means that the proteins become less surface active as compared to non-heated proteins. The thermodynamic affinity of protein aggregates towards air interfaces is weaker, however the proteins as disclosed are still surface active.

In a continuation of this work, Nicorescu et al. (Food Research International, 2008, vol. 41, p. 980-988) disclose that insoluble aggregates of whey protein apparently have the role of foam depressors.

EP 1 839 492 A1 discloses a method to prepare whey protein micelles by heating an aqueous whey protein solution at a pH between 3 and 8 to a temperature between 80 and 98°C, in the absence of shearing, followed by a concentration step. The last step is required to remove non-micellised material, or simply for concentration. The obtained micelles have a very small average particle size, and this material can be used as an emulsifier or as a foam stabiliser. This means that the micelles are still surface active.

US 4,855,156 discloses a frozen whipped dessert comprising non-aggregated particles of denatured protein. These particles are still surface active.

Smiddy et al (J. Dairy Sci, 2006, v 89, p 1906-1914) and Huppertz et al (Biomacromolecules 2007, v 8, p 1300 - 1305) disclosed in sequential works that casein micelles were successfully crosslinked by transglutaminase. The aggregates were stable in various environments, and there were little monomeric caseins release, which are in charge of surface activity in solution, after the crosslinks were formed. Smiddy et al (J. Dairy Sci, 2006, v 89, p 1906-1914) also reported that chemical crosslink of casein micelles were successfully made by chemical reagent, glutaraldehyde (J. Dairy Sci. Anderson et al, 1984, v 51, p 615-622). Micellar stability increased with degree of cross-linking and extensive cross-linking could make micelles very stable against disruption by almost any means (Huppertz et al, 2007,vol 8, p1300-1305).

## SUMMARY OF THE INVENTION

One of the objectives of the present invention is to provide aerated food products containing hydrophobins and other proteins, wherein the other proteins do not compete with hydrophobins present at the interface of the gas bubbles, and wherein the texture of the food product remains stable during storage of the food product. Moreover it is also an object of the present invention to provide a method to prepare food products containing such proteins wherein "protein" refers to proteins other than hydrophobin.

We have now determined that one or more of these objects can be achieved by an aerated food product comprising hydrophobins and comprising aggregated protein particles which have strongly reduced surface activity. An aqueous dispersion of such aggregated protein particles at a concentration of 1 % by weight at 25°C has a surface tension of at least 60 mN·m$^{-1}$, more preferably at least 65 mN m$^{-1}$, and most preferably at least 70 mN·m$^{-1}$. This has the result that the aggregated protein particles do not interfere with the solid particles that stabilise the air bubbles, and thus the structure of the food product remains stable during storage. Moreover as a further advantage no expensive process steps are required to produce this aggregated protein. The advantage of these aggregated protein particles is that they provide the nutritional value and texture usually connected to these proteins, without disturbing the stability of the aerated food composition, as these aggregated protein particles do not interfere with the surface active material present on the gas bubble interface. So these particles can be used in foams and aerated products, while keeping the structure of the aerated food product as intact as possible during storage.

Hence in a first aspect the present invention provides an aerated food product comprising 0.001% to 2% w/w hydrophobin, preferably up to 1% w/w and 0.1% to 20% w/w of protein particles, wherein an aqueous dispersion of said protein particles at a concentration of 1% by weight at 25°C has a surface tension of at least 60 mN·m$^{-1}$, more preferably at least 65 mN m$^{-1}$, and most preferably at least 70 mN·m; and the aerated food product contains less than 1 % w/w, preferably less than 0.1% w/w, even more preferably less than 0.01 % w/w of proteins on top of hydrophobin and protein particles.

Preferably, the protein particles are selected from the group consisting of:

. aggregated globular protein particles
. cross-linked casein

. any mixture thereof

More preferably, the protein particles are aggregated protein particles, even more preferably aggregated globular proteins.

In another preferred embodiment, the protein particles cross-linked casein particles.

In a second aspect the present invention provides a method for production of an aerated food product according to the first aspect of the invention, comprising the steps of:

a) adding 0.001% to 2%. w/w hydrophobin, preferably up to 1% w/w;

b) aerating the composition of step a) in the presence of aggregated protein particles mixed or aggregated protein particles are mixed into the foam of a) and wherein the aggregated protein particles are obtainable by a method for preparation of aggregated protein particles, comprising the steps:

c) dissolving or dispersing a protein in an aqueous solution at a concentration between 4% and 15% by weight;

d) aggregating the proteins into particles having a volume weighted mean diameter between 200 nanometer and 20 micrometer, preferably between 500 nanometer and 15 micrometer, more preferably between 1 micrometer and 4 micrometer;

e) separating aggregated protein particles from non-aggregated protein, and wherein an aqueous dispersion of aggregated protein particles at a concentration of 1 % by weight at 25°C has a surface tension of at least 60 mN·m$^{-1}$, more preferably at least 65 mN m$^{-1}$, and most preferably at least 70 mN·m$^{-1}$.

## DETAILED DESCRIPTION

Unless defined otherwise, all technical and scientific terms used herein have the same meaning as commonly understood by one of ordinary skill in the art.

All percentages, unless otherwise stated, refer to the percentage by weight, with the exception of percentages cited in relation to the overrun.

In the context of the present invention, the average particle diameter is expressed as the $d_{4.3}$ value, which is the volume weighted mean diameter, unless stated otherwise. The volume based particle size equals the diameter of the sphere that has the same volume as a given particle.

The term 'aerated' means that gas has been intentionally incorporated into a composition, for example by mechanical means. The gas can be any gas, but is preferably, in the context of food products, a food-grade gas such as air, nitrogen, nitrous oxide, or carbon dioxide. The extent of aeration is measured in terms of 'overrun', which is defined as:

$$overrun = \frac{\text{weight of unaerated mix - weight of aerated product}}{\text{weight of aerated product}} \times 100\% \qquad (1)$$

where the weights refer to a fixed volume of aerated product and unaerated mix (from which the product is made). Overrun is measured at atmospheric pressure.

After formation, a foam will be vulnerable to coarsening by mechanisms such as creaming, Ostwald ripening and coalescence. By creaming, gas bubbles migrate under the influence of gravity to accumulate at the top of a product. Ostwald ripening or disproportionation refers to the growth of larger bubbles at the expense of smaller ones. Coalescence refers to merging of air bubbles by rupture of the film in between them.

A stable foam or aerated food product in the context of the present invention is defined as being stable for at least 30 minutes, more preferred at least an hour, more preferred at least a day, even more preferred at least a week, and most preferred at least a month, and most preferred several months. A stable foam can be defined to be stable with regard to total foam volume, and/or gas bubble size, and loses maximally 20% of its volume during 1 month storage. On the other hand systems may exist which lose more than 20% of its volume during 1 month storage, which nevertheless are considered to have a good stability, as the stability of such foams is much better than comparative foams. Stability can be described as that the foam and gas bubbles are stable against Ostwald ripening, which leads on the one hand to relatively small bubbles decreasing in size and relatively large bubbles increasing in size. This is caused by diffusion of gas from small to large bubbles, due to a higher effective Laplace pressure in the small bubbles as compared to the larger bubbles. In foams as described by the present invention, Ostwald ripening can be considered to be most important mechanism responsible for instability of the gas bubbles. An alternative mechanism for instability is coalescence, wherein two or more gas bubbles merge due to the breakage of the liquid interface between the bubbles and form one larger bubble with a larger volume.

Such a foam can be produced by aerating the solution of interest using an aerolatte, kenwood mixer, or a BA Mixer, to an overrun of 100%. The foam is then placed into a 100 mL measuring cylinder, stoppered, and stored at 5°C, and the foam volume measured over time. For larger volumes (> approximately 1 L of aeratable mix), one may use commercially available aerating apparatus such as an Oakes mixer, Mondomixer, or s Scrape Surface Heat Exchanger.

In the context of the present invention, a 'surface active' substance means a substance which lowers the surface tension of the medium in which it is dissolved with the air surface (e.g. the air-water surface), and/or the interfacial tension with other phases (e.g. the oil-water interface), and, accordingly, is positively adsorbed at the liquid/vapour and/or at other interfaces.

*Hydrophobins*

Hydrophobins are a well-defined class of proteins (Wessels, 1997, Adv. Microb. Physio. 38: 1-45; Wosten, 2001, Annu Rev. Microbiol. 55: 625-646) capable of self-assembly at a hydrophobic/hydrophilic interface, and having a conserved sequence:

Xn-C-X5-9-C-C-X11-39-C-X8-23-C-X5-9-C-C-X6-18-C-Xm (SEQ ID No. 1)

where X represents any amino acid, and n and m independently represent an integer. Typically, a hydrophobin has a length of up to 125 amino acids. The cysteine residues (C) in the conserved sequence are part of disulphide bridges. In the context of the present invention, the term hydrophobin has a wider meaning to include functionally equivalent proteins still displaying the characteristic of self-assembly at a hydrophobic-hydrophilic interface resulting in a protein film, such as proteins comprising the sequence:

Xn-C-X1-50-C-X0-5-C-X1-100-C-X1-100-C-X1-50-C-X0-5-C-X1-50-C-Xm (SEQ ID No. 2)

or parts thereof still displaying the characteristic of self-assembly at a hydrophobic-hydrophilic interface resulting in a protein film. In accordance with the definition of the present invention, self-assembly can be detected by adsorbing the protein to Teflon and using Circular Dichroism to establish the presence of a secondary structure (in general, $\alpha$-helix) (De Vocht et al., 1998, Biophys. J. 74: 2059-68).

The formation of a film can be established by incubating a Teflon sheet in the protein solution followed by at least three washes with water or buffer (Wosten et al., 1994, Embo. J. 13: 5848-54). The protein film can be visualised by any suitable method, such as labeling with a fluorescent marker or by the use of fluorescent antibodies, as is well established in the art. m and n typically have values ranging from 0 to 2000, but more usually m and n in total are less than 100 or 200. The definition of hydrophobin in the context of the present invention includes fusion proteins of a hydrophobin and another polypeptide as well as conjugates of hydrophobin and other molecules such as polysaccharides.

Hydrophobins identified to date are generally classed as either class I or class II. Both types have been identified in fungi as secreted proteins that self-assemble at hydrophobilic interfaces into amphipathic films. Assemblages of class I hydrophobins are relatively insoluble whereas those of class II hydrophobins readily dissolve in a variety of solvents.

Hydrophobin-like proteins have also been identified in filamentous bacteria, such as Actinomycete and Steptomyces sp. (WO01/74864). These bacterial proteins, by contrast to fungal hydrophobins, form only up to one disulphide bridge since they have only two cysteine residues. Such proteins are an example of functional equivalents to hydrophobins having the consensus sequences shown in SEQ ID Nos. 1 and 2, and are within the scope of the present invention.

The hydrophobins can be obtained by extraction from native sources, such as filamentous fungi, by any suitable process. For example, hydrophobins can be obtained by culturing filamentous fungi that secrete the hydrophobin into the growth medium or by extraction from fungal mycelia with 60% ethanol. It is particularly preferred to isolate hydrophobins from host organisms that naturally secrete hydrophobins. Preferred hosts are hyphomycetes (e.g. Trichoderma), basidiomycetes and ascomycetes. Particularly preferred hosts are food grade organisms, such as Cryphonectria parasitica which secretes a hydrophobin termed cryparin (MacCabe and Van Alfen, 1999, App. Environ. Microbiol. 65: 5431-5435).

Alternatively, hydrophobins can be obtained by the use of recombinant technology. For example host cells, typically micro-organisms, may be modified to express hydrophobins and the hydrophobins can then be isolated and used in accordance with the present invention. Techniques for introducing nucleic acid constructs encoding hydrophobins into host cells are well known in the art. More than 34 genes coding for hydrophobins have been cloned, from over 16 fungal species (see for example WO96/41882 which gives the sequence of hydrophobins identified in Agaricus bisporus; and Wosten, 2001, Annu Rev. Microbiol. 55: 625-646). Recombinant technology can also be used to modify hydrophobin sequences or synthesise novel hydrophobins having desired/improved properties.

Typically, an appropriate host cell or organism is transformed by a nucleic acid construct that encodes the desired hydrophobin. The nucleotide sequence coding for the polypeptide can be inserted into a suitable expression vector encoding the necessary elements for transcription and translation and in such a manner that they will be expressed under appropriate conditions (e.g. in proper orientation and correct reading frame and with appropriate targeting and expression sequences). The methods required to construct these expression vectors are well known to those skilled in the art.

A number of expression systems may be used to express the polypeptide coding sequence. These include, but are not limited to, bacteria, fungi (including yeast), insect cell systems, plant cell culture systems and plants all transformed with the appropriate expression vectors. Preferred hosts are those that are considered food grade - 'generally regarded as safe' (GRAS).

Suitable fungal species, include yeasts such as (but not limited to) those of the genera Saccharomyces, Kluyveromyces, Pichia, Hansenula, Candida, Schizo saccharomyces and the like, and filamentous species such as (but not limited to) those of the genera Aspergillus, Trichoderma, Mucor, Neurospora, Fusarium and the like.

The sequences encoding the hydrophobins are preferably at least 80% identical at the amino acid level to a hydrophobin identified in nature, more preferably at least 95% or 100% identical. However, persons skilled in the art may make conservative substitutions or other amino acid changes that do not reduce the biological activity of the hydrophobin. For the purpose of the invention these hydrophobins possessing this high level of identity to a hydrophobin that naturally occurs are also embraced within the term "hydrophobins".

Hydrophobins can be purified from culture media or cellular extracts by, for example, the procedure described in WO01/57076 which involves adsorbing the hydrophobin present in a hydrophobin-containing solution to surface and then contacting the surface with a surfactant, such as Tween 20, to elute the hydrophobin from the surface. See also Collen et al., 2002, Biochim Biophys Acta. 1569: 139-50; Calonje et al., 2002, Can. J. Microbiol. 48:1030-4; Askolin et al., 2001, Appl Microbiol Biotechnol. 57: 124-30; and De Vries et al., 1999, Eur J Biochem. 262: 377-85.

The hydrophobin used in the present invention can be a Class I or a Class II hydrophobin. Preferably, the hydrophobin used is a Class II hydrophobin. Most preferably, the hydrophobin used is HFBI or HFBII.

*Aerated food product*

In a first aspect the present invention provides an aerated food product comprising 0.001% to 2% w/w hydrophobin, preferably up to 1 % w/w
and 0.1 % to 20% w/w protein particles,
wherein an aqueous dispersion of aggregated protein particles at a concentration of 1% by weight at 25°C has a surface tension of at least 60 mN·m$^{-1}$ for at least 1 minute after cleaning the air water surface of the protein dispersion. Preferably the surface tension is at least 65 mN·m$^{-1}$, more preferably at least 70 mN·m$^{-1}$ and even more preferably more than 71 mN·m$^{-1}$, or even more than 71.5 mN·m$^{-1}$ ,for at least 1 minute after cleaning the air water surface of the protein dispersion, and the aerated food product contains less than 1 % w/w, preferably less than 0.1 % w/w, even more preferably less than 0.01 % w/w of proteins on top of hydrophobin and protein particles.

Preferably the overrun of the food product is at least 10%, preferably at least 30%, more preferably at least 80%. Preferably also the overrun of the food product is below 200%, preferably below 150% even more preferably below 100%.

Preferably the food product according to the first aspect of the invention is aerated food product comprising 0.001% to 2% w/w hydrophobin, preferably up to 1 % w/w
and 0.1% to 20% w/w protein particles, wherein the aggregated protein particles are obtainable by a method for preparation of protein particles, comprising the steps:

    a) dissolving or dispersing a protein in an aqueous solution at a concentration between 4% and 15% by weight;
    b) aggregating the proteins into particles having a volume weighted mean diameter between 200 nanometer and 20 micrometer, preferably between 1 micrometer and 4 micrometer;
    c) separating aggregated protein particles from non-aggregated protein, wherein an aqueous dispersion of aggregated protein particles at a concentration of 1 % by weight at 25°C has a surface tension of at least 60 mN·m$^{-1}$. Preferably the surface tension is at least 65 mN·m$^{-1}$, more preferably at least 70 mN·m$^{-1}$ and even more preferably more than 71 mN·m$^{-1}$, or even more than 71.5 mN·m$^{-1}$.

The protein material used in the aerated food product according to the invention can be any protein material which may be aggregated, such that the aggregates can be separated from non-aggregated proteins. Aggregation of proteins in the context of the present invention is understood to be an irreversible process, meaning that the aggregates do not fall apart into single molecules upon change of conditions like pH, temperature, and the like.

A preferred protein material comprises dairy whey protein. Whey protein is well known, and mainly comprises beta-lactoglobulin (about 65% by weight), alpha-lactalbumin (about 25% by weight), and bovine serum albumine (about 8% by weight). The preferred whey protein may be any whey protein, such as native whey protein, or whey protein isolate, or whey protein concentrate. A preferred source of the whey protein is WPC 80, which is a whey protein concentrate containing about 80% protein. WPC 80 is manufactured from sweet dairy whey and spray dried. The product is a homogeneous, free flowing, semi-hygroscopic powder with a bland flavor. WPC 80 is commercially available from for example Davisco Foods (Le Sueur, MN, USA) or DMV International (Veghel, Netherlands).

Another preferred protein material is chicken egg white protein. The major protein present in chicken egg white protein is ovalbumin (about 54% by weight), which is a globular protein that aggregates upon application of heat (Weijers et al., Macromolecules, 2004, vol. 37, p. 8709-8714; Weijers et al., Food Hydrocolloids, 2006, vol. 20, p. 146-159). Other proteins present in chicken egg white are ovotransferrin (about 12-13% by weight), ovomucoid (about 11% by weight), ovomucin (about 1.5-3.5% by weight), and lysozyme (about 3.5% by weight).

Another preferred protein material is dairy protein caseins. This exists as casein micelles foam. The components which comprise casein micelles are $\alpha_{s1}$-, $\alpha_{s2}$-, $\beta$-and $\kappa$- casein, 4 phosphoproteins. Such casein micelles range in diameter from 50 to 300 nm, are highly hydrated, and contain, on a DM basils, ~ 94% casein and ~ 6% inorganic material, micellar calcium phosphate (MCP). The casein micelles are formed by MCP and/or electrostatic and/or hydrophobic interaction. The preferred caseins are from any of milk powder, such as full fat milk powder, skim milk powder (SMP) high heat treated, skim milk powder medium heat treated, or caseinates. A preferred source of the casein is skim milk powder, which has total ~ 32% proteins of which 80% is casein micelles and 20% is whey protein. SMP is commercially available from for example Dairy Crest (Surrey, UK).

Hence, preferably, the protein material used in the present invention is selected from the group consisting of dairy whey protein, chicken egg white protein and dairy milk protein, casein and its derivatives.

In the preferred step a), the protein is dissolved or dispersed in an aqueous solution at a concentration between 4% and 15% by weight. Preferably the protein concentration in step a) is between 5% and 13% by weight, more preferably between 6% and 12% by weight, most preferably between 8% and 12% by weight.

The pH in the preferred step a) at which the protein is dissolved is the natural pH which results from the dissolution or dispersion of the protein. The pH is not critical in this step, as long as it is above the iso-electric point of the (major amount of the) protein(s) used in the invention.

In the preferred step b) aggregates are formed from the proteins. This can be caused by denaturation of the proteins, due to which the conformation of the proteins changes, and the protein molecules will arrange into aggregates or conglomerates. Aggregates are structures in which the proteins are joined and that can be separated from non-aggregated proteins. The aggregates are generally insoluble in water. The aggregation facilitates the separation of the dissolved proteins and insoluble proteins. The particle size of the agglomerates that are formed in the preferred step b) is such that the volume weighted mean diameter is between 200 nanometer and 20 micrometer. The size of these agglomerates can be determined by any suitable method which is known to the skilled person. Preferably the volume weighted mean diameter is at least 300 nanometer, more preferred at least 350 nanometer, more preferred at least 400 nanometer, more preferred at least 450 nanometer, most preferred at least 500 nanometer. Preferably the volume weighted mean diameter is not more than 15 micrometer, more preferred not more than 10 micrometer, more preferred not more than 6 micrometer, more preferred not more than 4 micrometer, most preferred not more than 3 micrometer. The aggregated particle volume averaged mean diameter is most preferably at least 1 micrometer, more preferred at least 1.3 micrometer, most preferred at least 1.5 or at least 2 micrometer. A most preferred range for the volume weighted mean diameter in the preferred step b) is between 500 nanometer and 15 micrometer, even more preferred between 1 micrometer and 4 micrometer. At this diameter range good results were obtained. Preferred ranges combining the preferred endpoints mentioned in this paragraph are within the scope of this invention.

In a further preferred process step for the preparation of the aggregated protein particles, the obtained particles may be decreased in size before being used further, for example by any method known in the art such as ultrasound. The decrease of the size of the aggregates may be done to an average diameter of the obtained material of about 200, or 300, 400, or even 500 nanometer, or larger than this, depending on the initial size of the agglomerates before size reduction.

Preferably in the preferred step b) at least 50% by weight of the protein present in step a) is aggregated: More preferably at least 60% by weight, more preferably at least 70% by weight, more preferably at least 80% by weight, even more preferably at least 90% by weight of the protein present in step a) is aggregated in step b). This can be determined by methods known to the skilled person. During the aggregation in step b), the aggregation takes place gradually over time, during which time the amount of protein material that is aggregated grows to a maximum, and when this maximum has been reached, the aggregation remains at this maximum. This means that a plateau is reached at the maximum aggregation.

Physical treatment for irreversible protein aggregation: Heating

Preferably, in the preferred aggregation step b), aggregation is performed by heating of the protein solution under shear at a temperature between 75 and 99°C, during a period of between 10 and 300 minutes. Due to the heating step, the proteins denaturate, especially globular proteins such as whey protein and egg proteins, leading to a change of the conformation of the proteins. For globular proteins like beta-lactoglobulin and ovalbumin this generally leads to aggregation of these proteins.

The denaturation temperatures of some of the preferred proteins which are aggregated by heat are as follows (Fox, 1989, Developments in dairy chemistry, part 4, Elsevier, London and New York; Weijers et al., Food Hydrocolloids, 2006, vol. 20, p. 146-159):

beta-lactoglobulin: 67-72°C at pH 6.5
alpha-lactalbumin: 62°C at pH 6.5
serum albumine: 85°C at pH 6.5
ovalbumin: 75-84°C
ovotransferrin: 61-65°C
ovomucoid: 77°C
lysozyme: 69-77°C

Heating

If heating is used as a method to aggregate the proteins, the heating temperature preferably is higher than the denaturation temperature of the protein which is used in the method according to the invention. For example in case of the use of whey proteins in the method according to the invention, the heating temperature is preferably higher than the denaturation temperatures of beta-lactoglobulin and alpha-lactalbumin, thus higher than 72°C. At those preferred denaturation temperatures the precipitation of the major proteins is quicker than at lower temperatures. In case of the use of egg white proteins in the method according to the invention, the heating temperature preferably is above 80°C, because at that temperature the major part of the proteins present will denature and aggregate.

If heating is used as a method to aggregate the proteins, preferably the temperature is at least 80°C, more preferred at least 82°C, more preferred at least 83°C. Preferably the temperature is maximally 95°C, more preferred maximally 90°C, most preferred maximally 85°C. A preferred range for the temperature is between 80 and 85°C, more preferred between 80 and 83°C, or alternatively between 83°C and 85°C. Preferred ranges combining these above mentioned preferred endpoints are within the scope of this invention.

The heating time of the protein solution is more preferably between 20 and 300 minutes, more preferably between 30 and 300 minutes, preferably between 40 and 300 minutes, more preferred between 50 and 300 minutes. More preferred the heating time is maximally 240 minutes, more preferred maximally 180 minutes. Preferred ranges combining these above mentioned preferred endpoints are within the scope of this invention.

During this heating period, the amount of protein present that aggregates gradually grows to a maximum, as indicated before.

If heating is applied in the preferred step b) to aggregate the protein into particles, the protein concentration, the heating time, and the heating temperature are dependent on each other. If the temperature is relatively high, then the heating time can be relatively short, and the plateau at which the maximum aggregation has been reached, is reached relatively quickly. Additionally, a higher protein concentration leads to a shorter heating time, due to relatively rapid reaching of the earlier mentioned plateau.

If heating is applied in the preferred step b), the process is carried out under shear. The amount of shear applied to the process is such that the proteins will not form a gel upon the heating process. The shear can be applied for example by mixing with a stirrer during the heating of the protein solution.

Chemical treatments for irreversible protein aggregation: chemical or enzymatic crosslinking

Preferably, in the preferred aggregation step b), aggregation can be performed by crosslinking of the protein solution with chemicals or enzymes around optimum pHs.

Chemical/enzymatic crosslinking

If crosslinking is applied in the preferred aggregation step b), aggregation is performed either by chemical (e.g., Glutaraldehyde) or by enzymatic (e.g., Transglutaminase) crosslingking of proteins.
If crosslinking is applied by enzymes, the preferred enzyme is transglutaminase.
If chemical crosslinking is applied, preferred chemical is glutaraldehyde.
Any enzyme which catalyzes an acyl-transfer reaction between the carboxyl group of a peptide-bound glutamine residue and the $\alpha$-amino group of a lysine residue is preferred.
Any chemicals of forming intermolecular covalent bonds among amino acids in protein, such as glutaraldehyde, formaldehyde, genipin, or tannic acid, are preferred.

If enzyme is used as a method to aggregate the proteins, preferably the temperature and pH is at its optimum, in case transglutaminase, around 40°C and pH 7. The ratio of protein vs enzyme is 100:1 to 50:1. Time is more than several hours, preferrably overnight.

If chemicals are used as a method to aggregate the proteins, preferably the temperature and pH is at its optimum, in case glutaraldehyde, room temperature and pH around 8. The ratio of protein vs chemical is 6.4: 1

In the preferred step c) the agglomerated protein is separated from the non-agglomerated protein, such that an aqueous dispersion of aggregated protein particles at a concentration of 1 % by weight at 25°C has a surface tension of at least 60 mN·m$^{-1}$, preferably at least 65 mN·m$^{-1}$, more preferably at least 70 mN·m$^{-1}$ and even more preferably more than 71 mN·m$^{-1}$, or even more than 71.5 mN·m$^{-1}$ for at least 1 minute after cleaning the air water surface of the protein dispersion. This step may be performed by filtering, by using a filter having a pore size which retains the agglomerated protein particles, while the non-agglomerated proteins can freely flow through the filter. Another method to separate the agglomerated protein particles from the non-agglomerated protein particles is by centrifuging the solution obtained in step b), in order to concentrate the obtained agglomerates, followed by removing the supernatant. Subsequently the obtained residue after centrifuging can be washed and concentrated again by centrifuging, in order to wash away the non-agglomerated proteins. During this washing step the volume of water added to the residue is preferably at least the same as the volume of the residue. More preferred the volume of water added is at least twice the volume of the residue, preferably at least triple the volume of the residue. During the washing step the residue is resuspended in the water and washed with the added water. The non-agglomerated protein is washed away with the water. Therewith a material is obtained which nearly completely only comprises aggregated protein particles that are not surface active. Hence preferably the separation in step c) is performed by washing with water. The number of washing steps is preferably at least 3, more preferred at least 5, and most preferred at least 10. Another preferred method for the preferred step c) is that the separation is performed by a method which includes filtration.

A preferred method to produce aggregated whey protein particles is the following:

a) dissolve 5 to 15% by weight whey powder concentrate (for example WPC 80 ex DMV International) in water;
b) introduce the protein solution into a jacketed double walled glass vessel kept at a temperature between 75°C and 85°C, typically slightly above 80°C, and set to stir at about 700rpm on a magnetic stirrer for 45 minutes to 300 minutes;
c) quench cool the solution in cold water;
d) dilute the heated solution at least 3 fold with pure water and divide over centrifuge tubes and centrifuge for 30 minutes at 10,000 to 15,000 g;
e) remove the supernatant and replace with water;
f) repeat steps d and e at least 5 times.

Alternatively the steps d), e), and f) could be performed by filtration.

A preferred method to produce aggregated chicken egg white protein particles is the following:

a) introduce liquid egg white protein (for example Ovod'or, ex Van Tol Convenience Food, 's-Hertogenbosch, The Netherlands) into a jacketed double walled glass vessel kept at a temperature slightly above 80°C and set to stir at about 700 rpm on a magnetic stirrer for about 100 minutes;
b) quench cool the solution in cold water;
c) dilute the heated solution at least 3 fold with pure water and divide over centrifuge tubes and centrifuge for 30 min at 10,000 to 15,000 g;
d) remove the supernatant and replace with water;
e) repeat steps c and d at least 5 times;

Alternatively the steps c), d), and e) could be performed by filtration.

A preferred method to produce aggregated Skim milk powder particles is the following:

a) dissolve e.g., 10% by weight skim milk powder (for example Medium heat treated sweet skim milk powder (SMP) ex Dairy Crest) in pH adjusted water to the optimum pH of enzyme;
b) Add transglutaminase to the protein solution. The ratio of protein vs enzyme was 6.4:1. Proteins in SMP are about 32%. pH of the solution is 7 which is natural pH of the solution and also the optimum pH for the enzyme introduced.
c) Reaction has been done at 40C for 16 hrs.
d) Heating at 85C for 5 min to deactivate enzyme;

Alternatively, if GAH is applied to aggregation of Skim milk powder,

e) dissolve e.g., 10% by weight skim milk powder (for example Medium heat treated sweet skim milk powder (SMP) ex Dairy Crest) in pH adjusted water to the optimum pH of GAH, 7.8.
f) Add GAH to the protein solution. The ratio of protein vs GAH was 30:1.
g) Reaction has been done at room temperature for 16 hrs.

After both reactions with SMP,

h) Adjust solution pH to 4.6 to make proteins precipitated
i) Centrifuge for 100min at 5C at 9000 g;
j) Remove the supernatant and replace it with distilled water.
k) Stir the sample at 5C overnight.
l) repeat steps l to n at least 3 times.

Alternatively the steps i), j), k) and l) could be performed by filtration.

Preferably, in a further subsequent process step to produce agglomerated chicken egg white protein particles, the obtained aggregated protein particles are dried. The optional drying may be performed by any method which is common in the art. For example, freeze drying on a small scale, or spray drying on a larger scale. A preferred drying method is especially spray drying. If the aggregated protein particles are dried, preferably they are mixed prior to drying with one or more sugars, and especially maltodextrin is a preferred sugar. This has the advantage that the obtained powders are easier to disperse after drying, if they contain maltodextrin in addition to the protein. If maltodextrin is used, then the weight ratio between maltodextrin and protein in the particles is preferably between 5:1 and 1:5, more preferably between 2:1 and 1:2.

Most preferably a method for preparation of the aggregated protein particles comprises the steps:

a) dissolving or dispersing a protein in an aqueous solution at a concentration between 4% and 15% by weight, wherein the protein is selected from the group consisting of dairy whey protein and chicken egg white protein;
b) aggregating the proteins into particles having a volume weighted mean diameter between 200 nanometer and 20 micrometer, more preferred between 500 nanometer and 15 micrometer, more preferred between 1 micrometer and 4 micrometer; and wherein the aggregating is performed by heating of the protein solution under shear at a temperature between 75 and 99°C, preferably between 80°C and 85°C, during a period of between 10 and 300 minutes, preferably between 40 and 300 minutes; Alternatively, aggregation is performed by chemical treatment or enzyme treatment to enforce crosslinking among molecules. The time required is more than few hours, preferably overnight. The pHs of reaction is the optimum pHs of reagents, preferably with glutaraldehyde, pH 7,8 and with transglutaminase, pH 7. The temperature during reaction is around at the optimum temperatures of the reagent activity. Preferably with glutaraldehyde, room temperature and with transglutaminase, around 40 C.
c) separating aggregated protein particles from non-aggregated protein, and wherein the separation is performed by washing with water, wherein the number of washing steps is preferably at least 3, more preferred at least 5, and most preferred at least 10; alternatively this separation by step c) can be performed by filtration.

The overrun of the aerated food product according to the invention is at least 10%, preferably at least 30%, more preferably at least 80%. Preferably also the overrun of the food product is below 200%, preferably below 150% even more preferably below 120%.

*Method for production of aerated food product*

In a second aspect the present invention provides a method for production of an aerated food product according to the first aspect of the invention, comprising the steps of:

a) adding .001 % to 2%. w/w hydrophobin;
b) aerating the composition of step a) to create a foam;

and wherein after step a) aggregated protein particles are mixed into the dispersion, and/or wherein after step b) aggregated protein particles are mixed into the foam,
and wherein the aggregated protein particles are obtainable by a method for preparation of aggregated protein particles, comprising the steps:

c) dissolving or dispersing a protein in an aqueous solution at a concentration between 4% and 15% by weight;
d) aggregating the proteins into particles having a volume weighted mean diameter between 200 nanometer and 20 micrometer, preferably between 500 nanometer nad 15 micrometer, more preferably between 1 micrometer and 4 micrometer;

e) separating aggregated protein particles from non-aggregated protein, and wherein an aqueous dispersion of aggregated protein particles at a concentration of 1% by weight at 25°C has a surface tension of at least 60 mN·m$^{-1}$. Preferably the surface tension is at least 65 mN·m$^{-1}$, more preferably at least 70 mN·m$^{-1}$ and even more preferably more than 71 mN·m$^{-1}$, or even more than 71.5 mN·m$^{-1}$.

This method means that the aggregated protein particles can be added to the aqueous composition of step a) prior to aeration, and/or after the aeration step. The aqueous foam composition of step b) suitably has an overrun of at least 10%, preferably at least, more preferably between 5% and 800%, more preferably between 10% and 600%, even more preferrably between 15% and 500%.

The food product may comprise ingredients commonly present in the food product, and these may be added to the food product before or after aeration, as is common to the skilled person. The food product may undergo various process steps before being able to be marketed, such as possible pasteurisation or packaging steps.

Advantageously the food products according to the invention remain stable for at least 30 minutes, more preferred at least an hour, more preferred at least a day, even more preferred at least a week, and more preferred at least a month, and most preferred several months. With stable is meant that the foam is stable, which means that gas bubbles in the foam do not coalescence to become larger gas bubbles, or only show very limited coalescence and/or coarsening.

Suitable aerated food products are for example dressings like mayonnaise. Such dressings may have a total oil content ranging from 5% to 70% or 80% by weight. All such products are within the scope of the present invention.

The foams can also be used in food products to provide solid or semi-solid (e.g. spreadable) food products having a lower calorie content, while not being visible in the food product.

Further examples of preferred food products are cereal bars, beverages, desserts, snacks, spreads like margarine or low fat margarines or dairy spreads, dressings, mayonnaise, sauces, cheese (soft cheese, hard cheese), soups, dairy drinks, milk shakes, yoghurts, fruit drinks or juices, vegetable drinks or juices, combinations of dairy, and/or fruit, and/or vegetable drinks (e.g. smoothies,, cocoa drinks, and especially dairy mini-drinks.

Other preferred food compositions are frozen foods like ice cream, shorbets, or other frozen desserts.

Also soups (both in dry form (which have to be reconstituted with water), as well as liquid soups) are within the scope of the present invention. By incorporation of the foam into such food products, a creamy soup can be obtained, which does not have the calories associated normally with creamy soups (to which generally cream is added).

In case the food product is a beverage, more specifically a fruit drink, or combination of fruit and dairy drink, it preferably comprises at least 10% by weight of the composition of a fruit component, wherein the fruit component is selected from fruit juice, fruit concentrate, fruit juice concentrate, fruit puree, fruit pulp, comminuted fruit, fruit puree concentrate, and combinations thereof. Examples of such fruit components are orange juice, apple juice, grape juice, peach pulp, banana pulp, apricot pulp, concentrated orange juice, mango pulp, concentrated peach juice, raspberry puree, strawberry puree, apple pulp, raspberry pulp, concentrated grape juice, concentrated aronia juice, concentrated elderberry juice. Preferably such a beverage comprises at least 30% by weight of the beverage of said fruit component, more preferred at least 40% by weight of the beverage of said fruit component. These amounts are calculated as if undiluted, non-concentrated fruit juices and purees and the like are used. Thus, if 0.5% by weight of a 6-fold fruit concentrate is used, the actual amount of fruit component incorporated is 3% by weight of the beverage. Any commonly available fruit component might be used in the beverages according to the invention, and may be selected from one or more of the following fruit sources: citrus fruit (e.g. orange, tangerine, lemon or grapefruit); tropical fruit (e.g. banana, peach, mango, apricot or passion fruit); red fruit (e.g. strawberry, cherry, raspberry or blackberry), or any combination thereof.

In a further preferred embodiment the food product is a spread such as water-in-oil emulsions, for example a margarine or low fat margarine type food product. A spread may also be an oil-in-water emulsion, like dairy spreads or fresh soft cheeses. Suitably the total triglyceride level of such a spread may range from about 10% by weight to 85% by weight of the composition, more preferred from 20% to 70% by weight, most preferred from 30% to 60% by weight of the composition.

Especially preferred aerated food products according to the present invention are dairy drinks, which may for instance be used as a meal replacer.

The food product may be dried and contain less than 40% water by weight of the composition, preferably less than 25%, more preferably from 1 to 15%. Alternatively, the food may be substantially aqueous and contain at least 40% water by weight of the composition, preferably at least 50%, more preferably from 65 to 99.9%.

The food preferably comprises nutrients including one or more of the following: carbohydrate (including sugars and/or starches), protein, fat, vitamins, minerals, phytonutrients (including terpenes, phenolic compounds, organosulfides or a mixture thereof) or mixtures thereof. The food may be low calorie (e.g. have an energy content of less than 100 kCal per 100 g of the composition) or may have a high calorie content (e.g. have an energy content of more than 100 kCal per 100 g of the composition, preferably between 150 and 1000 kCal). The food may also contain salt, flavours, colours, preservatives, antioxidants, non-nutritive sweetener or a mixture thereof.

EXAMPLES

The following non-limiting examples illustrate the present invention.

Methods

Surface tension is measured as function of time using a Kruss K11 tensiometer, with the Wilhelmy plate method. All measurements are done at a protein concentration of 1% w/w by weight, at 25°C. The air water surface was cleaned right before the measurements by sucking the top surface with a Pasteur pipette connected to a water jet pump.

Particle sizing / electrophoresis: Dynamic light scattering measurements were carried out using a Zetasizer Nano ZS instrument (Malvern Instruments, Malvern, UK) to determine average particle diameters. Samples were measured without any dilution at 25°C. The viscosity of water was assumed in all cases and a refractive index of 1.59 was used in the analysis.

The results from the measurements are the z-average particle size and the standard deviation of the z-average particle size (which relates to the peak width of a distribution curve of the particle size). For monodisperse systems with a narrow distribution, the difference between the z-average particle diameter and volume weighted mean diameter ($d_{4,3}$) is smaller than 10%.

*Bubble diameter measurement*

The bubble diameter in the foams is estimated using turbidity measurement. Light, which is backscattered by the aerated product in a vertical sample holder is measured along the height of the container. This is translated into average bubble diameter.

Detailed procedure: sample volumes of approximately 20 mL were studied by turbidimetry using a Turbiscan Lab Expert (Formulaction, Toulouse, France). We interpret the average backscattering along the height of the foam sample with exclusion of the top and bottom parts where the backscattering is affected by edge effects. The backscattering (BS) is related to the transport mean free path ($\lambda$) of the light in the sample through:

$$BS = \frac{1}{\sqrt{\lambda}} \qquad (2)$$

In turn, the transport mean free path of light is related to the mean diameter (d) and the volume fraction ($\Phi$) of the gas bubbles through:

$$\lambda = \frac{2d}{3\Phi(1-g)Q} \qquad (3)$$

Where g and Q are optical constants given by Mie theory (G. F. Bohren and D.R.Huffman, Absorption and Scattering of Light by Small Particles. Wiley, New York, 1983). For foam dispersed in a transparent liquid, this method provides an estimate of the number average bubble size.

**Example 1: Preparation of aggregated whey protein particles**

Whey powder concentrate (WPC 80 ex DMV International) was dissolved in water at a concentration of 10% weight in a 1000 ml iso bottle (Schott Duran). The bottle containing the solution was introduced into a jacketed double walled glass vessel which was kept at a temperature of 80°C, and set to stir at ~700rpm on a magnetic stirrer for 60 min. Subsequently the solution/dispersion was quench cooled in cold water. The solution was diluted three-fold with water and divided over centrifuge tubes and centrifuged for 30 minutes at 10,000 g. The supernatant was removed, and again the agglomerated whey protein was dispersed in water at a three-fold dilution, and subsequently centrifuged for 30 minutes at 10,000 g. This was repeated 4 or 9 times, such that the agglomerated protein had been washed in total 5 or 10 times, as applicable. The z-average hydrodynamic diameter of the obtained aggregated protein particles was about 3.1 micrometer.

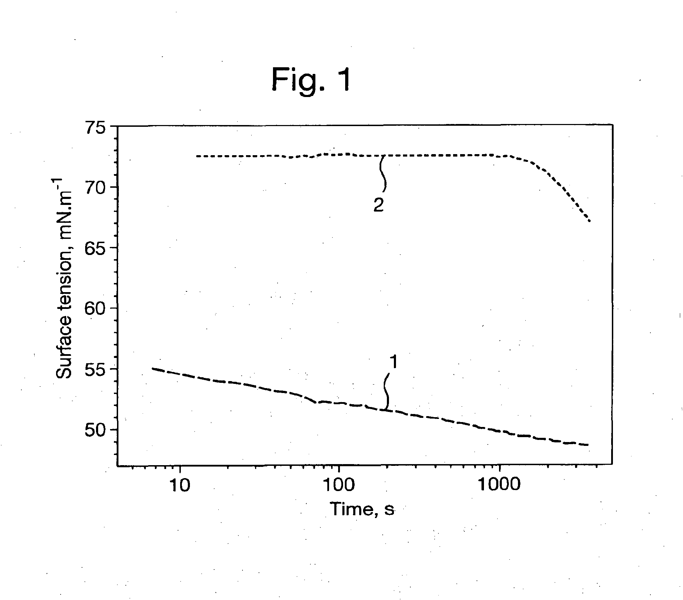

The surface tension of the heated whey protein solutions or dispersions was determined, at a concentration of 1% by weight at 25°C. In figure 1 it is shown that a solution of WPC 80 which has been heated at 80°C for 90 minutes (without subsequent washing) still has a relatively low surface tension (curve 1). The WPC 80 solution which has been heated at 80°C during 60 minutes at a concentration of 10% by weight and subsequently washed 10 times has a much higher surface tension (curve 2). The theoretical maximum surface tension is 71.97 mN m$^{-1}$, which is the surface tension of water. The surface tension of the dispersion of the aggregated protein particles according to the invention is about at the value of that of pure water, which means that the material is not surface active anymore. The material that has been washed 10 times shows some decrease of surface tension after about 1,000 seconds. This shows that the agglomerated and washed whey protein has a higher surface tension than not-washed WPC 80, even equal to the surface tension of pure water. This means that the agglomerated protein is not surface active anymore, and does not contribute to foaming. Also applying more washing steps improves the removal of surface active material.

**Example 2: Frozen aerated products containing HFBII and surface deactivated whey protein particles**

In this example we produce three frozen aerated products where the surface active component principally used to stabilise the foam phase is Hydrophobin HFBII from *Trichoderma reesei.* The stability of the product without protein (Product A) is compared to a product produced with standard whey protein (Product B) and also when produced with aggregated whey protein particles (Product C) as produced in Example 1.

The aerated products were prepared in a small scale batch freezer, a so-called "stirred pot". This apparatus consists of a cylindrical, vertically mounted, jacketed stainless steal vessel with internal proportions of height 105mm and diameter 72mm, which contained an agitator. The agitator consists of a rectangular impeller (72mm x 41.5mm) which scrapes the edge of the vessel as it rotates and two semi-circular blades (60mm diameter) positioned at a 45° angle to the impeller.

The general procedure for preparation of a frozen aerated product in a stirred pot apparatus is the following:

a. add 80 mL premix, the formulation as stated for Product 1 or Product 2 in the table;
b. set the cooling bath to a temperature of -18°C;
c. chill the stirred pot by circulating the cooling liquid for 10 seconds;
d. stir 1 minute at 100 rpm;
e. stir 1 minute at 1000 rpm;
f. start cooling the vessel by circulating the cooling liquid;
g. stir 3 minutes at 1000 rpm;
h. stir at 300 rpm until the mix has obtained a temperature of -5°C, or a torque of 0.7-0.8 N·m has been reached.
i. the aerated frozen product is then dosed into ca. 30mL sample containers, overrun determined, and then cooled further on solid carbon dioxide before transferring to a -80C before further analysis.

Fresh samples of the ice cream were stored at -80°C, at which temperature the texture of the ice cream is stable, air bubbles do not change their average diameter. Bubble stability of 'Temperature abused' samples were determined by storing the ice cream at -10°C for 1 week. Subsequently the ice cream was brought to -80°C again, in order to capture the structure. The average air bubble size can be determined by freeze fracturing samples of the ice cream at -80°C, and observing the ice cream fractured surface by scanning electron microscopy, both before and after storage at -10°C for 1 week.

Three samples of frozen aerated product were produced, as indicated in Table 1

**Table 1** Compositions and process parameters of frozen aerated products

| ingredient | product A [wt%] | product B [wt%] | product C * [wt%] |
|---|---|---|---|
| Hydrophobin HFBII; 2.7 wt% solution ex. VTT Biotechnology, Espoo Finland | 3.7 | 3.7 | 3.7 |
| sucrose | 25 | 25 | 25 |
| WPC 80 ex DMV international | 0 | 5 | 0 |
| aggregated whey protein particles; heat treated WPC 80 slurrry, containing 10% by weight whey protein (prepared as in example 1, 3 times washed) | 0 | 0 | 50 |
| Xanthan gum (Keltrol RD ex CP Kelco) | 0.2 | 0.2 | 0.2 |
| water | 71.1 | 66.1 | 66.1 |

(continued)

| Results | | | | |
|---|---|---|---|---|
| overrun | | 58% | 137% | 55% |

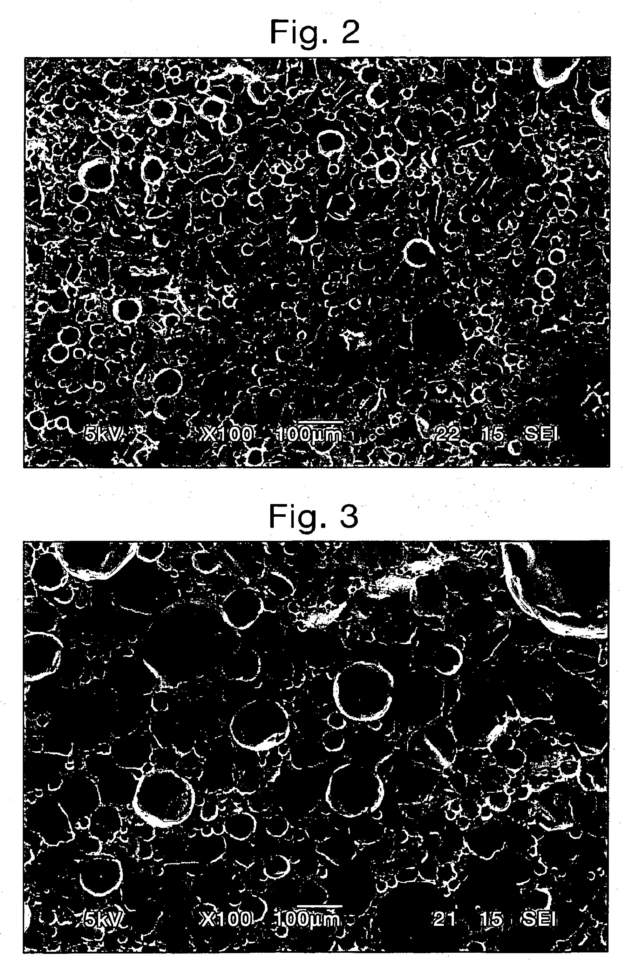

**Product A** (figures 2 and 3): frozen aerated product with HFBII, xanthan gum, and sugar. This sample is the reference highlighting the functionality of HFBII, without protein.

At -80°C (fresh), a homogeneous dispersion of air bubbles can be observed, with an average diameter of about 50 micrometer.

After keeping at -10°C for 1 week, still a homogeneous dispersion of air bubbles can be observed. It is noteworthy to mention that both a population of small bubbles and few large bubbles ($\geq$100 $\mu$m) can be observed, indicating a very limited extent of coarsening.

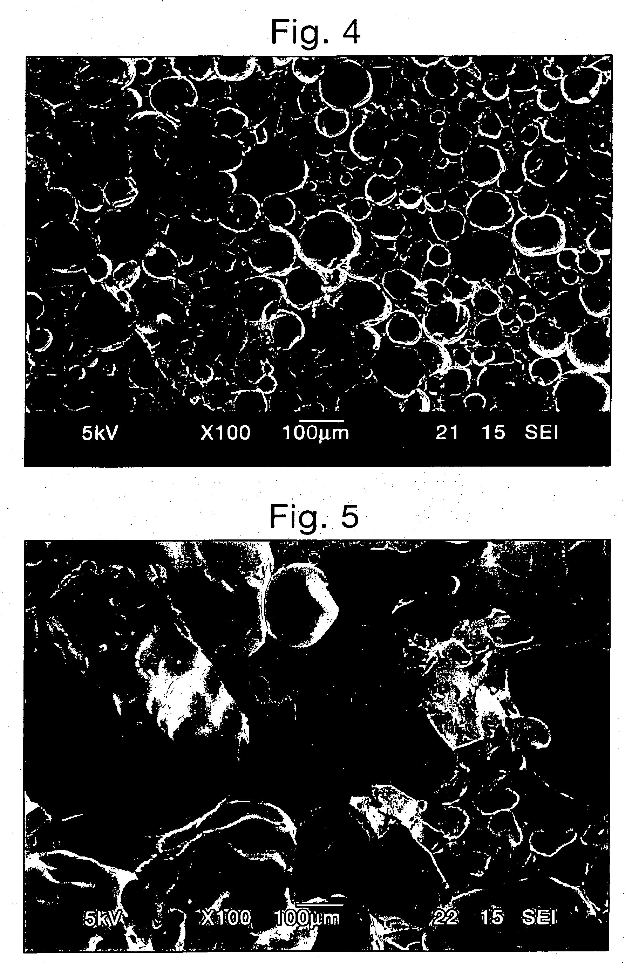

**Product B** (figures 4 and 5): frozen aerated product with HFBII, xanthan gum, sugar, and surface active whey protein (WPC 80 ex DMV International). This serves as comparative example.

At -80°C (fresh), a homogeneous dispersion of air bubbles could be observed, having an average diameter of about 100 micrometer.

After keeping at -10°C during 1 week, the product showed strong coarsening of the microstructure. Air bubbles have not only grown much larger than 100 micrometer, the growth is also accompanied by coalescence and channel formation. This shows the decay in stability of the ice cream structure due to competitive adsorption of non-aggregated whey proteins at the bubble interface, and therewith the stabilising effect of HFBII is decreased.

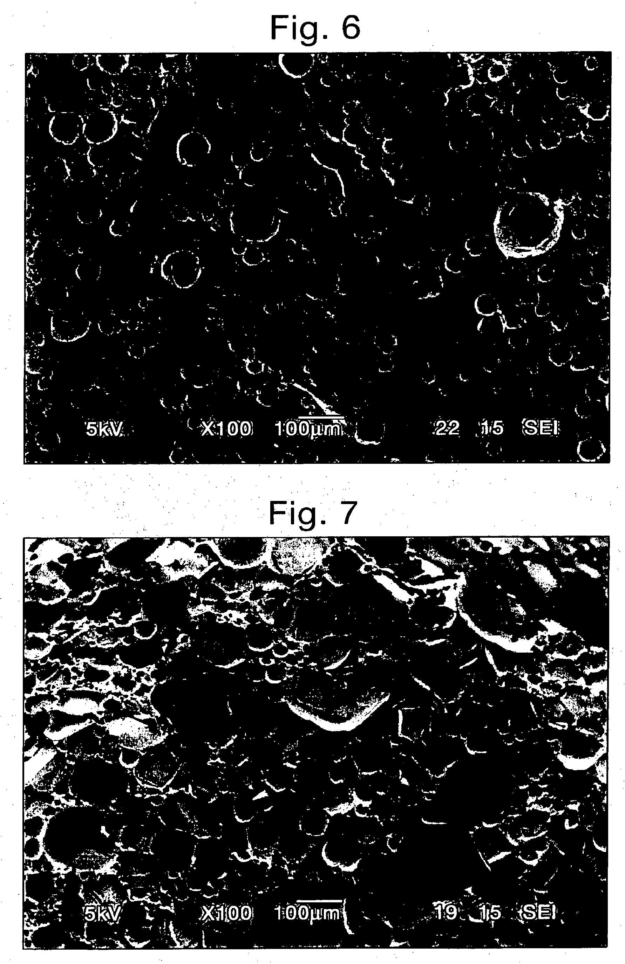

**Product C** (figures 6 and 7): frozen aerated product with HFBII, xanthan gum, sugar, and whey protein having reduced surface activity (heat treated WPC 80 10x washed from example 1).

At -80°C (fresh), a homogeneous dispersion of air bubbles could be observed with bubble sizes roughly ranging between 10 micrometer and 100 micrometer, although the overrun is lower than for product A. After keeping at -10°C during 1 week, the product showed a population of larger bubbles (i.e. about 100 micrometer), but also the population of remaining smaller bubbles (i.e. less than 10 micrometer) was apparent.

This set of products shown in this example shows that whey protein having reduced surface activity does not interfere with the HFBII to stabilise the air phase like surface active protein. Therefore, the air phase stability provided by HFBII is retained when protein is added in surface deactivated form.

### Example 3: Liquid aerated products comprising HFBI at high protein level

In this example, the bubble size evolution of aerated liquid products which contain a high amount of protein will be compared. The bubble size evolution of foam with an overrun lower than 100% is a measure of the stability against disproportionation. In this example Hydrophobin HFBII is the key foam stabilizer. The stability of a formulation with deactivated whey protein particles (product C) is compared to a formulation with untreated whey protein (product B), a formulation with skim milk powder and a formulation in the absence of protein (product A). Detailed product compositions are given in Table 2.

The formulations were prepared by mixing all ingredients (Table 2) into the liquid components by magnetic stirring to a total weight of 50 gram. Subsequently, 30 milliliter of each liquid formulation was aerated for 4 minutes using an aero-latte® type of mini-whisk, to an overrun of 100% at maximum. In addition, the products were subjected to 5 pressure cycles in which the volume of the air phase was repeatedly tripled (by pressure reduction in the headspace of the vessel containing the foam) and brought back to atmospheric pressure. These 5 pressure cycles took place within 5 minutes. After this, 20 milliliter of the resulting foam was transferred into a Turbiscan vial for assessment of the bubble size over time.

Table 2 Compositions and process parameters of liquid aerated products comprising the Class II hydrophobin HFBI

| Ingredient | comparative product A [wt%] | comparative product B [wt%] | product C [wt%] | comparative product D [wt%] |
|---|---|---|---|---|
| Hydrophobin HFBI | 0.1 | 0.1 | 0.1 | 0.1 |
| WPC 80 ex DMV international | 0 | 5.0 | 0 | 0 |

(continued)

| Ingredient | comparative product A [wt%] | comparative product B [wt%] | product C [wt%] | comparative product D [wt%] |
|---|---|---|---|---|
| Dried aggregated whey protein particles; (heat treated WPC 80 slurry, containing 10% by weight whey protein prepared as in example 1, 3 times washed and freeze dried) | 0 | 0 | 5.0 | 0 |
| Skim Milk Powder (SMP) ex Nordmilch | 0 | 0 | 0 | 15 |
| xanthan gum (Keltrol RD ex CP Kelco) | 0.50 | 0.50 | 0.50 | 0.50 |
| water | 99.4 | 94.4 | 94.4 | 84.4 |
| overrun obtained: | 140% | 138% | 65% | 125% |

The overrun obtained for product C is lower than that of the other products, which may be caused by the dispersion of deactivated whey protein which has a higher viscosity than not-heat treated whey. When the aeration time is equal or nearly equal, this results in a lower overrun. More important than the actual overrun is the amount and stability of small gas bubbles, as this determines the quality of the foam.

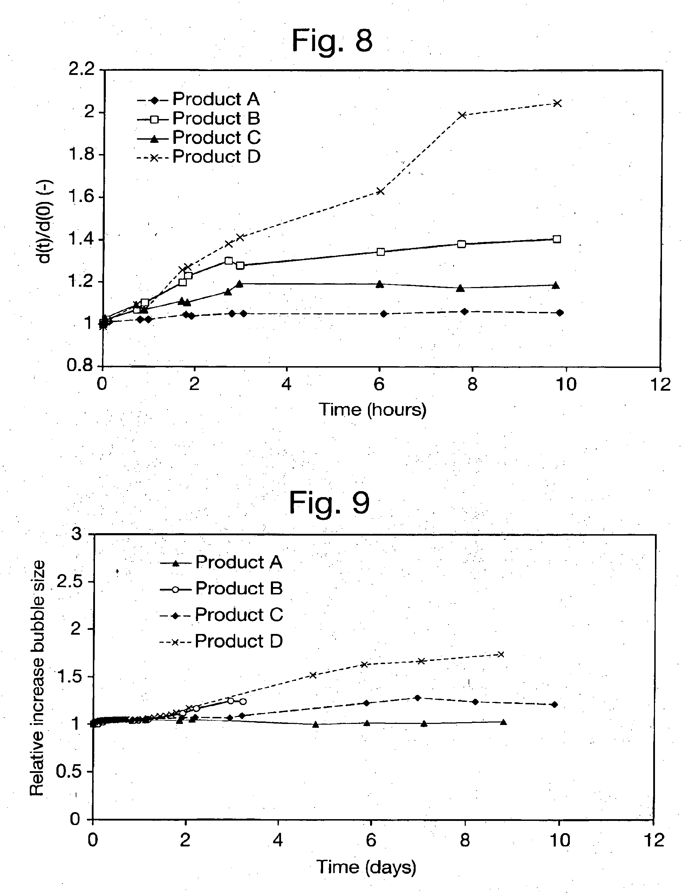

Figure 8 shows the relative increase in bubble diameter $d(t)/d(0)$ of the products A, B, C, and D, measured during a storage period of 10 days, after these products have been subjected to pressure cycling after production. A small and slow increase of the bubble diameter is considered to be beneficial, as in that case the structure of the foam is maintained during storage.
The curve of products A (HFBII only) and D (WPC80 only) indicates the extreme cases, where no significant bubble growth is observed.
Product B, HFBII + WPC80 and Product D, HFBII + SMP, show a fast decay as well, in the order of 5 days, which is significantly faster than HFBII alone.
This result demonstrates that competitive adsorption surface active whey protein or SMP with HFBII leads to virtually complete loss in functionality of stabiliser against disproportionation.
Finally product C shows a clear improvement in stability against coarsening, especially against product B. After a stage of modest initial coarsening, a plateau is reached similar as for the system purely stabilised by HFBII.

Taken together, the example indicates that the loss of functionality of HFBII as stabiliser against disproportionation due to competitive adsorption by whey protein or skim milk powder can be strongly reduced by incorporation of protein in the form of washed aggregates according to the current invention, which are not surface active anymore. Hence aerated food products can be made which are stable in structure, and which additionally also can contain substantial amounts of protein. Still the aerated, food product according to the invention is much more stable than a similar product that contains 'normal' surface active protein.

**Example 4: Liquid aerated products comprising HFBII at high protein level**

In this example, the bubble size evolution of aerated liquid products which contain a high amount of protein will be compared. The bubble size evolution of foam with an overrun lower than 100% is a measure of the stability against disproportionation. In this example Hydrophobin HFBII is the key foam stabilizer. The stability of a formulation with deactivated whey protein particles (product C) is compared to a formulation with untreated whey protein (product B), a formulation with skim milk powder and a formulation in the absence of protein (product A). All ocmpositions hava a total milk protein content of 5%. Detailed product compositions are given in Table 3.

The formulations were prepared by mixing all ingredients (Table 3) into the liquid components by magnetic stirring to a total weight of 50 gram. Subsequently, 30 milliliter of each liquid formulation was aerated for 4 minutes using an aero-latte® type of mini-whisk, to an overrun of 100% at maximum. In addition, the products were subjected to 5 pressure cycles in which the volume of the air phase was repeatedly tripled (by pressure reduction in the headspace of the vessel containing the foam) and brought back to atmospheric pressure. These 5 pressure cycles took place within 5 minutes. After this, 20 milliliter of the resulting foam was transferred into a Turbiscan vial for assessment of the bubble size over time.

Table 3 Compositions and process parameters of liquid aerated products comprising the Class II hydrophobin HFBII

| Ingredient | comparative product A [wt%] | comparative product B [wt%] | product C [wt%] | comparative product D [wt%] |
|---|---|---|---|---|
| Hydrophobin HFBII | 0.1 | 0.1 | 0.1 | 0.1 |
| WPC 80 ex DMV international | 0 | 5.0 | 0 | 0 |
| Dried aggregated whey protein particles; (heat treated WPC 80 slurry, containing 10% by weight whey protein prepared as in example 1, 3 times washed and freeze dried) | 0 | 0 | 5.0 | 0 |
| Skim Milk Powder (SMP) ex Nordmilch | 0 | 0 | 0 | 15 |
| xanthan gum (Keltrol RD ex CP Kelco) | 0.50 | 0.50 | 0.50 | 0.50 |
| water | 99.4 | 94.4 | 94.4 | 84.4 |
| overrun obtained: | 100% | 100% | 33.3% | 100% |

The overrun obtained for product C is lower than that of the other products, which may be caused by the dispersion of deactivated whey protein which has a higher viscosity than not-heat treated whey. When the aeration time is equal or nearly equal, this results in a lower overrun. More important than the actual overrun is the amount and stability of small gas bubbles, as this determines the quality of the foam.

Figure 9 shows the relative increase in bubble diameter d(t)/d(0) of the products A, B, C, and D, measured during a storage period of 14 days, after these products have been subjected to pressure cycling after production. A small and slow increase of the bubble diameter is considered to be beneficial, as in that case the structure of the foam is maintained during storage.

The curve of products A (HFBII only) and D (WPC80 only) indicates the extreme cases, where no significant bubble growth is observed.

Product B, HFBII + WPC80 and Product D, HFBII + SMP, show a fast decay as well, in the order of 5 days, which is significantly faster than HFBII alone.

This result demonstrates that competitive adsorption surface active whey protein or SMP with HFBII leads to virtually complete loss in functionality of stabiliser against disproportionation.

Finally product C shows a clear improvement in stability against coarsening, especially against product B. After a stage of modest initial coarsening, a plateau is reached similar as for the system purely stabilised by HFBII.

Taken together, the example indicates that the loss of functionality of HFBII as stabiliser against disproportionation due to competitive adsorption by whey protein or skim milk powder can be strongly reduced by incorporation of protein in the form of washed aggregates according to the current invention, which are not surface active anymore. Hence aerated food products can be made which are stable in structure, and which additionally also can contain substantial amounts of protein. Still the aerated food product according to the invention is much more stable than a similar product that contains 'normal' surface active protein.

**Example 5: Preparation of aggregated chicken egg white protein particles**

The following procedure was followed to prepare chicken egg white protein having reduced surface activity:

a. introduce liquid egg white protein (Ovod'or ex Van Tol Convenience Food, 's-Hertogenbosch, Netherlands) into a jacketed double walled glass vessel kept at a temperature slightly above 80°C and set to stir at 700 rpm on a magnetic stirrer for 100 minutes;
two separate samples were made, the first at a protein concentration of 10.5% by weight (Ovod'or as such), and a second at a protein concentration of 5.3% by weight (Ovod'or diluted with water);
b. quench cool the solution in cold water;
c. dilute the heated solution at least 3 fold with pure water and divide over centrifuge tubes and centrifuge for 30 minutes at 10,000 to 15,000 g;
d. remove the supernatant;
e. 1 sample was taken from the initial protein concentration of 5.3% and 1 sample was taken from the initial protein concentration of 10.5%, meaning without washing the residue (to determine the surface tension of these samples in water);
f. water was added to the remaining samples to replace the removed supernatant, water was mixed with the residue to wash the residue, followed by centrifuging again;
g. step f was repeated 2 times.

Five different samples were obtained:

- 1: Untreated chicken egg white, initial concentration 10.5wt%
- 2: heated chicken egg white protein, initial concentration 10.5wt%, not washed
- 3: heated chicken egg white protein, initial concentration 10.5wt%, 3x washed
- 4: heated chicken egg white protein, initial concentration 5.3wt%, not washed
- 5: heated chicken egg white protein, initial concentration 5.3wt%, 3x washed

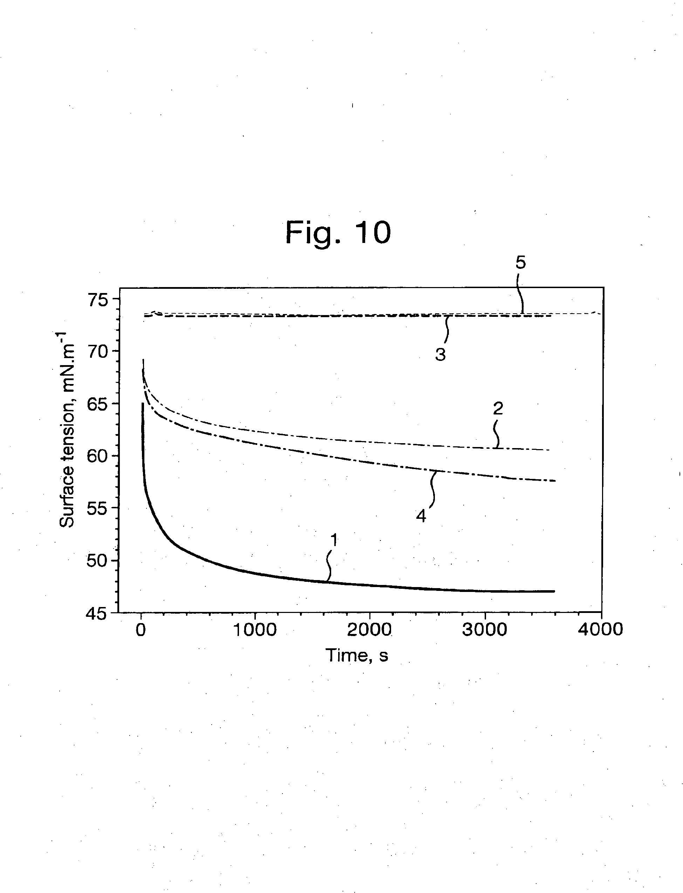

The surface tension of these chicken egg white protein solutions or dispersions was determined, as well as the unheated chicken egg white protein; all measurements were done at a protein concentration in water of 1% by weight at 25°C. Figure 10 gives the results of the measurements. Numbers indicating different curves correspond to the 5 samples stated above.

### Example 6: Frozen aerated products containing HFBII and surface deactivated egg-white protein particles

In this example we produce three frozen aerated products where the surface active component principally used to stabilise the foam phase is Hydrophobin HFBII from *Trichoderma reesei.* The stability of the product without protein (Product A) is compared to a product produced with standard egg white (Product B) and also when produced with aggregated egg-white protein particles (Product C) as produced in Example 5.
The aerated products were prepared in a small scale batch freezer, a so-called "stirred pot". This apparatus consists of a cylindrical, vertically mounted, jacketed stainless steal vessel with internal proportions of height 105mm and diameter 72mm, which contained an agitator. The agitator consists of a rectangular impeller (72mm x 41.5mm) which scrapes the edge of the vessel as it rotates and two semi-circular blades (60mm diameter) positioned at a 45° angle to the impeller.
The general procedure for preparation of a frozen aerated product in a stirred pot apparatus is the following:

a. add 80 mL premix, the formulation as stated for Product 1 or Product 2 in the table;
b. set the cooling bath to a temperature of -18°C;
c. chill the stirred pot by circulating the cooling liquid for 10 seconds;
d. stir 1 minute at 100 rpm;
e. stir 1 minute at 1000 rpm;
f. start cooling the vessel by circulating the cooling liquid;
g. stir 3 minutes at 1000 rpm;
h. stir at 300 rpm until the mix has obtained a temperature of -5°C, or a torque of 0.7-0.8 N·m has been reached.
i. the aerated frozen product is then dosed into ca. 30mL sample containers, overrun determined, and then cooled further on solid carbon dioxide before transferring to a -80C before further analysis.

Fresh samples of the ice cream were stored at -80°C, at which temperature the texture of the ice cream is stable, air bubbles do not change their average diameter. Bubble stability of 'Temperature abused' samples were determined by storing the ice cream at -10°C for 1 week. Subsequently the ice cream was brought to -80°C again, in order to capture the structure. The average air bubble size can be determined by freeze fracturing samples of the ice cream at -80°C, and observing the ice cream fractured surface by scanning electron microscopy, both before and after storage at -10°C for 1 week.
Three samples of frozen aerated product were produced, as indicated in the following table 4.

**Table 4** Compositions and process parameters of frozen aerated products

| ingredient | product A [wt%] | product B [wt%] | product C * [wt%] |
|---|---|---|---|
| Hydrophobin HFBII; 2.7 wt% solution ex. VTT Biotechnology, Espoo Finland | 3.7 | 3.7 | 3.7 |
| sucrose | 25 | 25 | 25 |
| Egg white | 0 | 23.8 | 0 |

(continued)

| ingredient | product A [wt%] | product B [wt%] | product C * [wt%] |
|---|---|---|---|
| aggregated egg-white protein particles; heat treated and washed egg-white slurrry, finally containing 6.9% by weight egg-white protein (prepared as in example 5, 3 times washed) | 0 | 0 | 36.8 |
| Xanthan gum (Keltrol RD ex CP Kelco) | 0.2 | 0.2 | 0.2 |
| water | 71.6 | 47.3 | 34.3 |
| **Results** | | | |
| overrun | 73% | 96% | 86% |

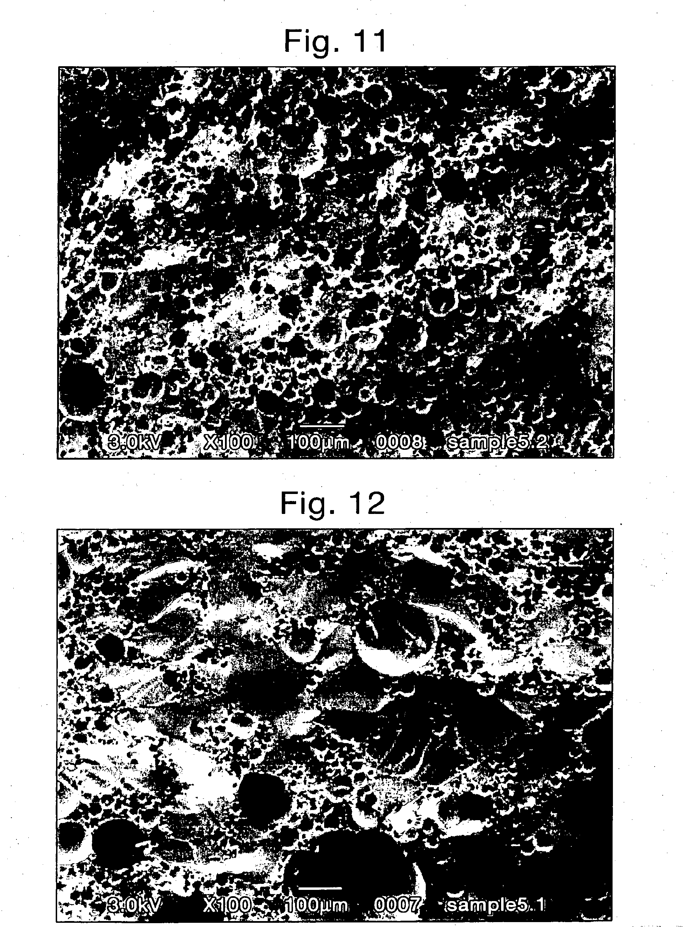

**Product A** (figures 11 and 12): frozen aerated product with HFBII, xanthan gum, and sugar. This sample is the reference highlighting the functionality of HFBII, without protein.

At -80°C (fresh, figure 11), a homogeneous dispersion of air bubbles can be observed, with an average diameter of about 50 micrometer.

After keeping at -10°C for 1 week, still a homogeneous dispersion of air bubbles can be observed (Figure 12). It is noteworthy to mention that both a population of small bubbles and few large bubbles ($\geq$100 $\mu$m) can be observed, indicating a very limited extent of coarsening.

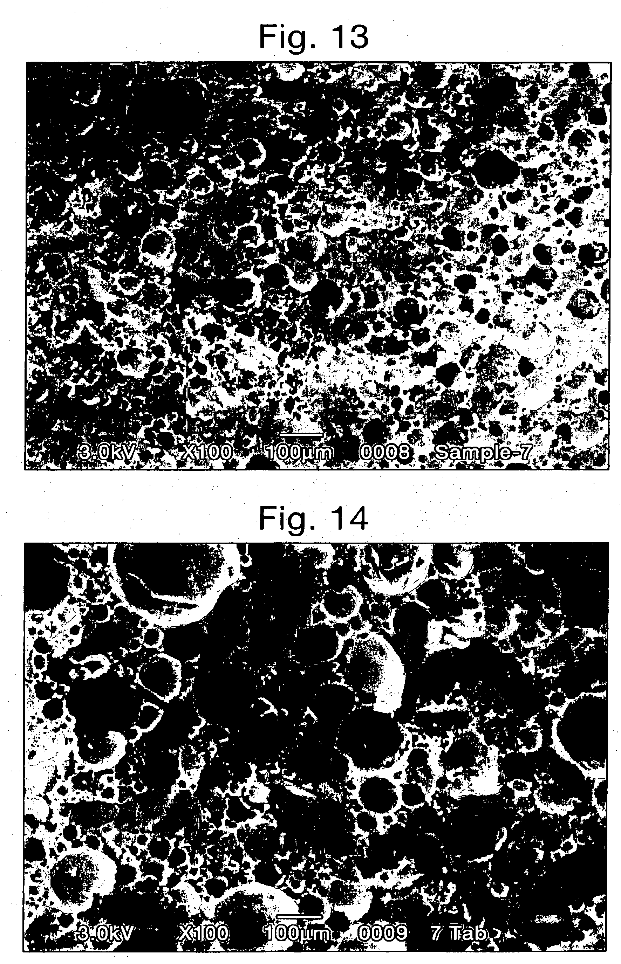

**Product B** (figures 13 and 14): frozen aerated product with HFBII, xanthan gum, sugar, and surface egg-white (Ovod'or ex Van Tol Convenience Food, 's-Hertogenbosch, Netherlands). This serves as comparative example.

At -80°C (fresh, figure 13), a homogeneous dispersion of air bubbles could be observed, having an average diameter of about 100 micrometer.

After keeping at -10°C during 1 week (figure 14), the product showed strong coarsening of the microstructure. A significant portion of the air bubbles has grown much larger than 100 micrometer. This shows the decay in stability of the ice cream structure due to competitive adsorption of non-aggregated egg-white proteins at the bubble interface, and therewith the stabilising effect of HFBII is decreased.

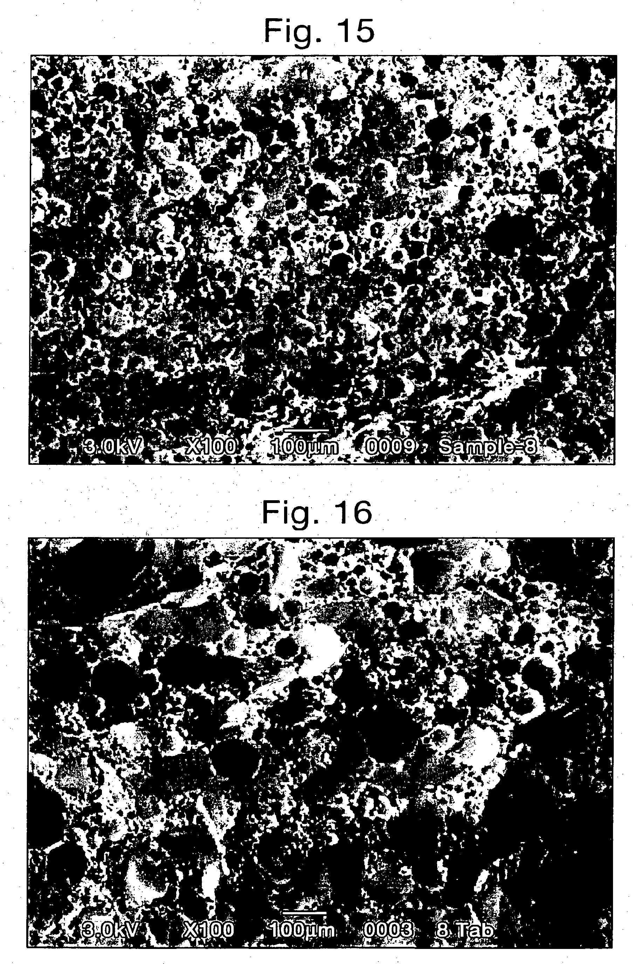

**Product C** (figures 15 and 16): frozen aerated product with HFBII, xanthan gum, sugar, and egg-white protein having reduced surface activity (heat treated egg-white 3x washed from example 5).

At -80°C (fresh, figure 15), a homogeneous dispersion of air bubbles could be observed with bubble sizes roughly ranging between 10 micrometer and 100 micrometer. After keeping at -10°C during 1 week (figure 16), the product showed a population of larger bubbles (i.e. about 100 micrometer), but also the population of remaining smaller bubbles (i.e. less than 10 micrometer) was apparent.

This set of products shown in this example shows that egg-white protein having reduced surface activity does not interfere with the HFBII to stabilise the air phase like surface active protein. Therefore, the air phase stability provided by HFBII is retained when protein is added in surface deactivated form.

**Example 7: Preparation of aggregated SMP protein particles**

A preferred method to produce agglomerated Skim milk powder particles is the following:

a) dissolve e.g., 10% by weight skim milk powder (for example Medium heat treated sweet skim milk powder (SMP) ex Dairy Crest) in pH adjusted water to the optimum pH of enzyme;
b) Add transglutaminase to the protein solution. The ratio of protein vs enzyme was 6.4:1. Proteins in SMP is about 32%. pH of the solution is 7 which is natural pH of the solution and also the optimum pH for the enzyme introduced.
c) Reaction has been done at 40C for 16 hrs.
d) Heating at 85C for 5 min to deactivate enzyme;

Alternatively, if GAH is applied to aggregation of Skim milk powder,

e) dissolve e.g., 10% by weight skim milk powder (for example Medium heat treated sweet skim milk powder (SMP) ex Dairy Crest) in pH adjusted water to the optimum pH of GAH, 7.8.
f) Add GAH to the protein solution. The ratio of protein vs GAH was 30:1.
g) Reaction has been done at room temperature for 16 hrs.

After both reactions with SMP,

h) Adjust solution pH to 4.6 to make proteins precipitated
i) Centrifuge for 100m in at 5C at 9000 g;
j) Remove the supernatant and replace it with distilled water.
k) Stir the sample at 5C overnight.
l) repeat steps l to n at least 3 times.

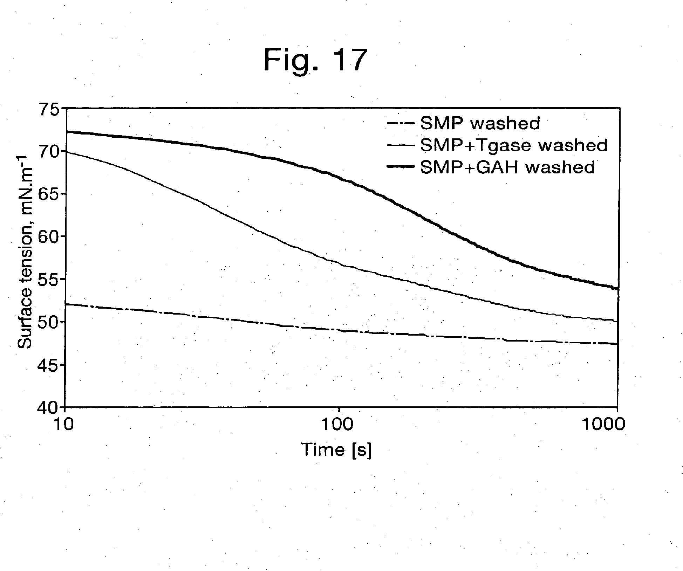

The surface tension of the supernatant of these SMP solutions or dispersions was determined, as well as the untreated SMP solution; all measurements were done at a protein concentration in water of 1% by weight at 25°C. Figure 17 gives the results of the measurements after 3 times of washing.

### Example 8: Frozen aerated products containing HFBII and surface deactivated casein rich milk protein (Skim milk protein, SMP) particles

In this example four frozen aerated products with similar overruns were produced with Hydrophobin HFBII from *Trichoderma reesei,* The stability of the product without other protein (Product A) is compared to a product produced with standard SMP (Product B) and also when produced with aggregated SMP protein particles (Product C and Product D) as produced in Example 7.
The aerated products were prepared in a small scale batch freezer, a so-called "stirred pot". This apparatus consists of a cylindrical, vertically mounted, jacketed stainless steal vessel with internal proportions of height 105mm and diameter 72mm, which contained an agitator. The agitator consists of a rectangular impeller (72mm x 41.5mm) which scrapes the edge of the vessel as it rotates and two semi-circular blades (60mm diameter) positioned at a 45° angle to the impeller.
The general procedure for preparation of a frozen aerated product in a stirred pot apparatus is the following:

a. add 80 mL premix, the formulation as stated for Product 1 or Product 2 in the table;
b. set the cooling bath to a temperature of -18°C;
c. chill the stirred pot by circulating the cooling liquid for 10 seconds;
d. stir 1 minute at 100 rpm;
e. stir 1 minute at 1000 rpm;
f. start cooling the vessel by circulating the cooling liquid;
g. stir 3 minutes at 1000 rpm;
h. stir at 300 rpm until the mix has obtained a temperature of -5°C, or a torque of 0.7-0.8 N·m has been reached.
i. the aerated frozen product is then dosed into ca. 30mL sample containers, overrun determined, and then cooled further on solid carbon dioxide before transferring to a -80C before further analysis.

Fresh samples of the ice cream were stored at -80°C, at which temperature the texture of the ice cream is stable, air bubbles do not change their average diameter. Bubble stability of 'Temperature abused' samples were determined by storing the ice cream at -10°C for 1 week. Subsequently the ice cream was brought to -80°C again, in order to capture the structure. The average air bubble size can be determined by freeze fracturing samples of the ice cream at -80°C, and observing the ice cream fractured surface by scanning electron microscopy, both before and after storage at -10°C for 1 week.
Four samples of frozen aerated product were produced, as indicated in Table 5

Table 5 Compositions of frozen aerated products. Products contain 0.2% ASP (14.5% x 1.38) or 0.2% ASP plus 3 wt% proteins.

| Ingredient (g) | Product A [wt%] | Product B [wt%] | Product C [wt%] | Product D [wt%] |
|---|---|---|---|---|
| Water | to 100% | to 100% | to 100% | to 100% |
| 14.5% HFBII solution (ex Danisco) | 1.38 | 1.38 | 1.38 | 1.38 |
| Normal Skim milk powder whose protein contents ~30% | | 10 | | |
| Washed Skim milk powder deactivated by transglutaminase(protein content of wet weight is 27.8%) | | | 10.8 | |

(continued)

| Ingredient (g) | Product A [wt%] | Product B [wt%] | Product C [wt%] | Product D [wt%] |
|---|---|---|---|---|
| Washed Skim milk powder deactivated by GAH (protein content of wet weight is 23.8%) | | | | 12.6 |
| Sucrose | 20 | 20 | 20 | 20 |
| Maltodextrin MD40 | 5 | 5 | 5 | 5 |
| Carrageenan L100 | 0.016 | 0.016 | 0.016 | 0.016 |
| Locust bean gum | 0.144 | 0.144 | 0.144 | 0.144 |
| Result | | | | |
| Overrun | 82% | 79% | 83% | 87% |

**Product A** (figures 18 and 19): frozen aerated product with HFBII, Maltodextrin, Carrageenan, Locust bean gum and sugar. This sample is the reference highlighting the functionality of HFBII, without protein.
At -80°C (fresh), a homogeneous dispersion of air bubbles can be observed, with an average diameter of about 50 micrometer.
After keeping at -10°C for 1 week, still a homogeneous dispersion of air bubbles can be observed, with an average diameter of about 30 micrometer, although quite ice crystals were grown (flat gray area). It is noteworthy to mention that quite population of small bubbles remained.

**Product B** (figures 20 and 21): frozen aerated product with HFBII, Maltodextrin, Carrageenan, Locust bean gum, sugar and surface active SMP(Dairy Crest). This serves as comparative example.
At -80°C (fresh), a homogeneous dispersion of air bubbles could be observed, having an average diameter of about 50 micrometer.
After keeping at -10°C during 1 week, the product showed strong coarsening of the microstructure. Air bubbles have grown much larger to ~average of 100 micrometer, the growth is also accompanied by coalescence and quite a lot of ice crystals (flat gray area). This shows the decay in stability of the ice cream structure due to competitive adsorption of non-aggregated SMP at the bubble interface, and therewith the stabilising effect of HFBII is decreased.

**Product C** (figures 22 and 23): ): frozen aerated product with HFBII, Maltodextrin, Carrageenan, Locust bean gum, sugar and deactivated SMP(Dairy Crest) by transglutaminase, 5X washed from example 7.
At -80°C (fresh), a homogeneous dispersion of air bubbles could be observed with average bubble sizes 40 micrometer.
After keeping at -10°C during 1 week, although quite ice crystals were grown (flat gray area) as with control product A, the product showed large population of small bubbles (i.e. average 20 micrometer) remained. The structure was similar with the control Product A.

This set of products shown in this example shows that SMP having reduced surface activity does not interfere with the HFBII to stabilise the air phase like surface active protein. Therefore, the air phase stability provided by HFBII is retained when protein is added in surface deactivated form.

**Product D** (figures 24 and 25): frozen aerated product with HFBII, Maltodextrin, Carrageenan, Locust bean gum, sugar and deactivated SMP (Dairy Crest) by Glutaraldehyde, 5X washed from example 7.
At -80°C (fresh), a homogeneous dispersion of air bubbles could be observed with average bubble sizes 20 micrometer.
After keeping at -10°C during 1 week, although quite ice crystals were grown (flat gray area) as with control product A, the product showed large population of small bubbles (i.e. average 30 micrometer) remained. The structure was similar with the control Product A.

This set of products shown in this example shows that SMP having more reduced surface activity through another way (Glutaraldehyde) used in Product C (transglutaminase) keep HFBII better stabilising the air phase than in Product C, differently from surface active protein. Therefore, the air phase stability provided by HFBII is retained when protein is added in surface deactivated form.

Table 6 shows how the bubble size actually increased

**Table** Foam coarsening of melted Ice creams.

| Time (day) | Relative increase in bubble size by time (Bubble size at time T=t / initial bubble size T=0)$^2$, $(d(t)/d(0))^2$ | | | |
|---|---|---|---|---|
| | Melted Product A in 0.5% xanthan | Melted Product B in 0.5% xanthan | Melted Product C in 0.5% xanthan | Melted Product D in 0.5% xanthan |
| 0 | 1 | 1 | 1 | 1 |
| 0.15 | 1.15 | 1.18 | 1.15 | 1.12 |
| 1 | 1.22 | 1.35 | 1.31 | 1.20 |
| 2 | 1.29 | 1.57 | 1.41 | 1.29 |

This table shows the relative increase in bubble diameter d(t)/d(0) of the products A, B, C, and D, in melted status measured during a storage period of 2 days. Freshly made four ice cream products in Table 5 were melted and mixed with 2% xanthan to make finally in 0.5% xanthan solution.

The curve of products A (HFBII only) and D (HFBII and deactivated SMP with GAH) indicates the extreme cases, where no significant bubble growth is observed.

Product B, HFBII + active SMP shows a fast decay, as shown in Figure 17 with surface tension and Figure 21, which is significantly faster than HFBII alone.

Product C, HFBII + deactivated SMP with Tgase shows a middle decay. This is in line with the surface tension which is still more surface active than the deactivated SMP with GAH. This result demonstrates that competitive adsorption surface active SMP with HFBII leads to virtually complete loss in functionality of stabiliser against disproportionation.

Product C and expecially D shows a clear improvement in stability against coarsening, especially against product B.

Taken together, the example indicates that the loss of functionality of HFBII as stabiliser against disproportionation due to competitive adsorption by whey protein or skim milk powder can be strongly reduced by incorporation of protein in the form of washed aggregates according to the current invention, which are less surface active. Hence aerated food products can be made which are stable in structure, and which additionally also can contain substantial amounts of protein. Still the aerated food product according to the invention is much more stable than a similar product that contains 'normal' surface active protein.

**Claims**

1. An aerated food product comprising 0.001 % to 2% w/w hydrophobin and 0.1% to 20% w/w protein particles, wherein an aqueous dispersion of said protein particles at a concentration of 1% by weight at 25°C has a surface tension of at least 60 mN·m$^{-1}$, and the aerated food product contains less than 1% w/w, preferably less than 0.1% w/w, even more preferably less than 0.01% w/w of proteins on top of hydrophobin and said protein particles.

2. Aerated food product according to claim 1 which is a frozen aerated food product.

3. Aerated food product according to claim 1 or 2 wherein the protein particles are selected from the group consisting of aggregated protein particles, cross-linked casein particles or any mixture thereof

4. Aerated food product according to claim 3 wherein the protein particles are aggregated protein particles

5. An aerated food product according to claim 4,
   wherein the aggregated protein particles are obtainable by
   a method for preparation of aggregated protein particles, comprising the steps:

   a) dissolving or dispersing a protein in an aqueous solution at a concentration between 4% and 15% by weight;
   b) aggregating the proteins into particles having a volume weighted mean diameter between 200 nanometer and 20 micrometer, preferably between 1 micrometer and 4 micrometer;
   c) separating aggregated protein particles from non-aggregated protein, wherein an aqueous dispersion of aggregated protein particles at a concentration of 1 % by weight at 25°C has a surface tension of at least 60 mN·m$^{-1}$.

**6.** An aerated food product according to claim 4 or 5, wherein the protein is selected from the group consisting of dairy whey protein and egg white protein.

**7.** An aerated food product according to claim 5, wherein step b) is performed by heating of the protein solution under shear at a temperature between 75 and 99°C, preferably between 80°C and 85°C, during a period of between 10 and 300 minutes, preferably between 40 and 300 minutes.

**8.** An aerated food product according to any of claims 5, wherein the separation in step c) is performed by washing with water.

**9.** An aerated food product according to any of claims 1 to 8, wherein the hydrophobin is a class II hydrophobic.

**10.** An aerated food product according to any of claims 8, wherein the hydrophobin is HFB II or HFBI.

**11.** A method for production of an aerated food product according to any of claims 1 to 10, comprising the steps of:

a) Adding hydrophobin to an aqueous composition,
b) introduction of gas bubbles to the composition of step a) to create a foam;
and wherein after step a) aggregated protein particles are mixed into the dispersion, and/or wherein after step b) aggregated protein particles are mixed into the foam,
and wherein the aggregated protein particles are obtainable by a method for preparation of aggregated protein particles, comprising the steps:
c) dissolving or dispersing a protein in an aqueous solution at a concentration between 4% and 15% by weight;
d) aggregating the proteins into particles having a volume weighted mean diameter between 200 nanometer and 20 micrometer, preferably between 500 nanometer and 15 micrometer, more preferably between 1 micrometer and 4 micrometer;
e) separating aggregated protein particles from non-aggregated protein, and wherein an aqueous dispersion of aggregated protein particles at a concentration of 1% by weight at 25°C has a surface tension of at least 60 $mN \cdot m^{-1}$.

**Patentansprüche**

**1.** Mit Luft durchsetztes Lebensmittelprodukt,
das 0,001 bis 2 Gew.-% Hydrophobin und 0,1 bis 20 Gew.-% Proteinteilchen aufweist, wobei eine wässrige Dispersion der Proteinteilchen mit einer Konzentration von 1 Gew.-% bei 25 °C eine Oberflächenspannung von mindestens 60 $mN \cdot m^{-1}$ hat und wobei das mit Luft durchsetzte Lebensmittelprodukt weniger als 1 Gew.-%, vorzugsweise weniger als 0,1 Gew.-%, noch stärker bevorzugt weniger als 0,01 Gew.-% Protein auf Hydrophobin und den Proteinteilchen enthält.

**2.** Mit Luft durchsetztes Lebensmittelprodukt nach Anspruch 1,
das ein gefrorenes, mit Luft durchsetztes Lebensmittelprodukt ist.

**3.** Mit Luft durchsetztes Lebensmittelprodukt nach Anspruch 1 oder 2,
wobei die Proteinteilchen aus der Gruppe ausgewählt sind, die aus aggregierten Proteinteilchen, vernetzten Caseinteilchen und irgendeinem Gemisch davon besteht.

**4.** Mit Luft durchsetztes Lebensmittelprodukt nach Anspruch 3,
wobei die Proteinteilchen aggregierte Proteinteilchen sind.

**5.** Mit Luft durchsetztes Lebensmittelprodukt nach Anspruch 4,
wobei die aggregierten Proteinteilchen nach einem Verfahren zum Herstellen von aggregierten Proteinteilchen erhalten werden können, das die folgenden Schritte aufweist:

a) Lösen oder Dispergieren eines Proteins in einer wässrigen Lösung mit einer Konzentration von 4 bis 15 Gew.-%;
b) Aggregieren der Proteine zu Teilchen mit einem volumengewichteten Durchschnittswert des Durchmessers von 200 nm bis 20 $\mu$m, vorzugsweise von 1 bis 4 $\mu$m;

c) Trennen der aggregierten Proteinteilchen vom nicht-aggregierten Protein, wobei eine wässrige Dispersion von aggregierten Proteinteilchen mit einer Konzentration von 1 Gew.-% bei 25 °C eine Oberflächenspannung von mindestens 60 mN·m$^{-1}$ hat.

**6.** Mit Luft durchsetztes Lebensmittelprodukt nach Anspruch 4 oder 5, wobei das Protein aus der Gruppe ausgewählt ist, die aus aus der Molkerei stammendem Molkeprotein und Eiweißprotein besteht.

**7.** Mit Luft durchsetztes Lebensmittelprodukt nach Anspruch 5, wobei der Schritt b) durch Erwärmen der Proteinlösung unter einer Scherung bei einer Temperatur von 75 bis 99 °C, vorzugsweise 80 bis 85 °C, während eines Zeitraums von 10 bis 300 Minuten, vorzugsweise 40 bis 300 Minuten durchgeführt wird.

**8.** Mit Luft durchsetztes Lebensmittelprodukt nach Anspruch 5, wobei die Trennung im Schritt c) durch Waschen mit Wasser erfolgt.

**9.** Mit Luft durchsetztes Lebensmittelprodukt nach einem der Ansprüche 1 bis 8, wobei das Hydrophobin Hydrophobin der Klasse II ist.

**10.** Mit Luft durchsetztes Lebensmittelprodukt nach Anspruch 8, wobei das yHydrophobin HFB II oder HFB I ist.

**11.** Verfahren zum Herstellen eines mit Luft durchsetzten Lebensmittelproduktes nach einem der Ansprüche 1 bis 10, das die folgenden Schritte aufweist:

a) Zugeben von Hydrophobin zu einer wässrigen Zusammensetzung,
b) Einführen von Gasblasen in die Zusammensetzung vom Schritt a), um einen Schaum zu erzeugen; und wobei nach dem Schritt a) aggregierte Proteinteilchen in die Dispersion gemischt werden und/oder wobei nach dem Schritt b) aggregierte Proteinteilchen in den Schaum gemischt werden, und wobei die aggregierten Proteinteilchen nach einem Verfahren zum Herstellen von aggregierten Proteinteilchen erhalten werden können, das die folgenden Schritte aufweist:
c) Lösen oder Dispergieren eines Proteins in einer wässrigen Lösung mit einer Konzentration von 4 bis 15 Gew.-%;
d) Aggregieren der Proteine zu Teilchen mit einem volumengewichteten Durchschnittswert des Durchmessers von 200 nm bis 20 $\mu$m, vorzugsweise von 500 nm bis 15 $\mu$m, stärker bevorzugt von 1 bis 4 $\mu$m;
e) Trennen der aggregierten Proteinteilchen vom nicht-aggregierten Protein, wobei eine wässrige Dispersion von aggregierten Proteinteilchen mit einer Konzentration von 1 Gew.-% bei 25 °C eine Oberflächenspannung von mindestens 60 mN·m$^{-1}$ hat.

## Revendications

**1.** Produit alimentaire aéré comprenant de 0,001 % à 2 % p/p d'hydrophobine et de 0,1 % à 20 % p/p de particules de protéines, dans lequel une dispersion aqueuse desdites particules de protéine à une concentration de 1 % en poids à 25 °C a une tension de surface d'au moins 60 mN.m$^{-1}$ et le produit alimentaire aéré contient moins de 1 % p/p, de préférence moins de 0,1 % p/p, encore plus préférablement moins de 0,01 % p/p de protéines au-dessus de l'hydrophobine et desdites particules de protéine.

**2.** Produit alimentaire aéré selon la revendication 1, qui est un produit alimentaire aéré congelé.

**3.** Produit alimentaire aéré selon la revendication 1 ou 2, dans lequel les particules de protéine sont choisies dans le groupe constitué par les particules de protéine agrégées, les particules de caséine réticulées ou n'importe quel mélange de celles-ci.

**4.** Produit alimentaire aéré selon la revendication 3, dans lequel les particules de protéine sont des particules de protéine agrégées.

**5.** Produit alimentaire aéré selon la revendication 4, dans lequel les particules de protéine agrégées peuvent être obtenues par un procédé de préparation de particules de protéine agrégées, comprenant les étapes consistant à :

a) dissoudre ou disperser une protéine dans une solution aqueuse à une concentration comprise entre 4 % et 15 % en poids ;
b) agréger les protéines en particules ayant un diamètre moyen pondéré en volume compris entre 200 nanomètres et 20 micromètres, de préférence entre 1 micromètre et 4 micromètres ;
c) séparer les particules de protéine agrégées de la protéine non agrégée, une dispersion aqueuse des particules de protéine agrégées à une concentration de 1 % en poids à 25 °C ayant une tension de surface d'au moins 60 mN.m$^{-1}$.

6.  Produit alimentaire aéré selon la revendication 4 ou 5, dans lequel la protéine est choisie dans le groupe constitué par une protéine de lactosérum de produit laitier et une protéine de blanc d'oeuf.

7.  Produit alimentaire aéré selon la revendication 5, dans lequel l'étape b) est réalisée par chauffage de la solution de protéine sous cisaillement à une température comprise entre 75 et 99 °C, de préférence entre 80 °C et 85 °C, pendant une période comprise entre 10 et 300 minutes, de préférence entre 40 et 300 minutes.

8.  Produit alimentaire aéré selon la revendication 5, dans laquelle la séparation de l'étape c) est réalisée par lavage avec de l'eau.

9.  Produit alimentaire aéré selon l'une quelconque des revendications 1 à 8, dans lequel l'hydrophobine est une hydrophobine de classe II.

10. Produit alimentaire aéré selon l'une quelconque des revendications 1 à 8, dans lequel l'hydrophobine est l'HFB II ou l'HFBI.

11. Procédé de production d'un produit alimentaire aéré selon l'une quelconque des revendications 1 à 10, comprenant les étapes consistant à :

a) ajouter de l'hydrophobine à une composition aqueuse,
b) introduire des bulles de gaz dans la composition de l'étape a) pour créer une mousse ;

et après l'étape a), les particules de protéine agrégées étant mélangées dans la dispersion et/ou après l'étape b), les particules de protéine agrégées étant mélangées dans la mousse,
et les particules de protéine agrégées pouvant être obtenue par un procédé de préparation de particules de protéine agrégées comprenant les étapes consistant à :

c) dissoudre ou disperser une protéine dans une solution aqueuse à une concentration comprise entre 4 % et 15 % en poids ;
d) agréger les protéines en particules ayant un diamètre moyen pondéré en volume compris entre 200 nanomètres et 20 micromètres, de préférence entre 500 nanomètres et 15 micromètres, plus préférablement entre 1 micromètre et 4 micromètres ;
e) séparer les particules de protéine agrégées de la protéine non agrégée, et

une dispersion aqueuse des particules de protéine agrégées à une concentration de 1 % en poids à 25 °C ayant une tension de surface d'au moins 60 mN.m$^{-1}$.

# Fig. 1

## Fig. 2

## Fig. 3

## Fig. 4

5kV    X100    100μm        21   15   SEI

## Fig. 5

5kV    X100    100μm        22   15   SEI

## Fig. 6

## Fig. 7

## Fig. 8

## Fig. 9

## Fig. 10

## Fig. 11

3.0kV    X100    100µm    0008    sample5.2

## Fig. 12

3.0kV    X100    100µm    0007    sample5.1

## Fig. 13

3.0kV    X100    100μm    0008    Sample-7

## Fig. 14

3.0kV    X100    100μm    0009    7 Tab

## Fig. 15

3.0kV    X100    100μm    0009    Sample-8

## Fig. 16

3.0kV    X100    100μm    0003    8 Tab

# Fig. 17

**EP 2 670 256 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2007116848 A
- EP 1839492 A1
- US 4855156 A
- WO 0174864 A
- WO 9641882 A
- WO 0157076 A

**Non-patent literature cited in the description**

- *J. Agric. Food Chem.,* 2005, vol. 53, 8216-8223
- *Trends Food Sci.Technol,* 1997, vol. 8, 334-339
- *J. Food Sci.,* 2002, vol. 67, 708-713
- *J. Agric. Food Chem.,* 2004, vol. 52, 7897-7904
- *Food Hydrocolloids,* 2004, vol. 18, 647-654
- **BIOTECHNOL. ADV.** *Biotechnol. AdV,* 2005, vol. 23, 71-73
- *J. Agric. Food Chem.,* 1998, vol. 46, 4022-4029
- *Lebensm.-Wiss. Technol.,* 1999, vol. 32, 129-133
- *J. Agric. Food Chem.,* 2001, vol. 48, 3202-3209
- *J. Food Sci.,* 1996, vol. 61, 825-828
- *J. Cereal Sci,* 2004, vol. 40, 127-135
- *Mater. Sci. Eng. C: Biomimetic Supramol. Syst.,* 2004, vol. 24, 441-446
- *Ind. Crops Prod.,* 2004, vol. 20, 281-289
- *Ind. Crops Prod.,* 2004, vol. 20, 291-300
- Chemistry of Protein Conjugation and Cross-Linking. CRC Press, 1991
- *Methods Enzymol.,* 1983, vol. 91, 580-609
- *Food Sci. Biotechnol.,* 2000, vol. 9 (21), 228-233
- *Trans.ASAE,* 1995, vol. 38, 1805-1808
- *J. Agric. Food Chem.,* 2001, vol. 49, 4676-4681
- *Int. J. Food Sci. Technol.,* 1995, vol. 30, 599-608
- *J. Agric. Food Chem.,* 1997, vol. 45, 1596-1599
- *Polymer,* 2002, vol. 43, 5417-5425
- *Food Hydrocolloids,* 2004, vol. 18, 717-726
- *Lebensm.-Wiss. Technol.,* 2004, vol. 37, 731-738
- *Cereal Foods World,* 1996, vol. 41, 376-382
- **PHILLIPS et al.** *Journal of Food Science,* 1990, vol. 55, 1116-1119
- **DISSANAYAKE et al.** *Journal of Dairy Science,* 2009, vol. 92, 1387-1397
- **NICORESCU et al.** *Food Research International,* 2008, vol. 41, 707-713
- **NICORESCU et al.** *Food Research International,* 2008, vol. 41, 980-988
- **SMIDDY et al.** *J. Dairy Sci,* 2006, vol. 89, 1906-1914
- **HUPPERTZ et al.** *Biomacromolecules,* 2007, vol. 8, 1300-1305
- **ANDERSON et al.** *J. Dairy Sci.,* 1984, vol. 51, 615-622
- **WESSELS.** *Adv. Microb. Physio.,* 1997, vol. 38, 1-45
- **WOSTEN.** *Annu Rev. Microbiol,* 2001, vol. 55, 625-646
- **DE VOCHT et al.** *Biophys. J.,* 1998, vol. 74, 2059-68
- **WOSTEN et al.** *Embo. J.,* 1994, vol. 13, 5848-54
- **MACCABE ; VAN ALFEN.** *App. Environ. Microbiol.,* 1999, vol. 65, 5431-5435
- **COLLEN et al.** *Biochim Biophys Acta,* 2002, vol. 1569, 139-50
- **CALONJE et al.** *Can. J. Microbiol,* 2002, vol. 48, 1030-4
- **ASKOLIN et al.** *Appl Microbiol Biotechnol,* 2001, vol. 57, 124-30
- **DE VRIES et al.** *Eur J Biochem.,* 1999, vol. 262, 377-85
- **WEIJERS et al.** *Macromolecules,* 2004, vol. 37, 8709-8714
- **WEIJERS et al.** *Food Hydrocolloids,* 2006, vol. 20, 146-159
- **FOX.** Developments in dairy chemistry. Elsevier, 1989
- **G. F. BOHREN ; D.R.HUFFMAN.** Absorption and Scattering of Light by Small Particles. Wiley, 1983

35